(19) Europäisches Patentamt
European Patent Office
Office européen des brevets

(11) EP 1 652 432 A2

(12) EUROPEAN PATENT APPLICATION

(43) Date of publication:
**03.05.2006 Bulletin 2006/18**

(21) Application number: **05028622.8**

(22) Date of filing: **06.08.2003**

(51) Int Cl.:
***A01N 43/40*** ***(2006.01)*** ***A01N 61/00*** ***(2006.01)***
*A01N 43/40* *(2006.01)* *A01N 61/00* *(2006.01)*
*A01N 25/32* *(2006.01)*

(84) Designated Contracting States:
**AT BE BG CH CY CZ DE DK EE ES FI FR GB GR HU IE IT LI LU MC NL PT RO SE SI SK TR**

(30) Priority: **07.08.2002 CH 13712002**

(62) Document number(s) of the earlier application(s) in accordance with Art. 76 EPC:
**03017961.8 / 1 388 285**

(71) Applicant: **Syngenta Participations AG**
**4058 Basel (CH)**

(72) Inventor: **Haas, Ulrich Johannes**
**Syngenta Crop Protection AG**
**4332 Stein (CH)**

(74) Representative: **Hölscher, Ingo**
**Syngenta Participations AG**
**Intellectual Property**
**P.O. Box**
**4002 Basel (CH)**

Remarks:
This application was filed on 29 - 12 - 2005 as a divisional application to the application mentioned under INID code 62.

(54) **Herbicidal composition**

(57) A herbicidal composition, comprising

a) a compound of formula I

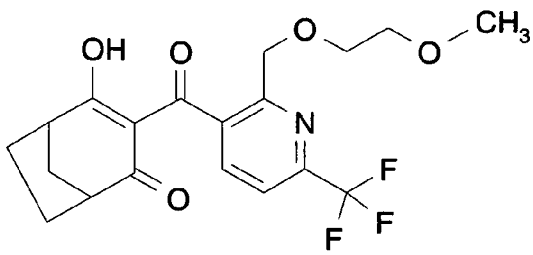

(I)

or an agronomically acceptable salt of that compound, and
b) a synergistically effective amount of one or more compounds selected from glyphosate and the potassium, isopropylammonium, sodium, trimesium, ammonium and diammonium salts thereof, simazine, terbutryn, ametryn, foramsulfuron, trifloxysulfuron, metolachlor, S-metolachlor, alachlor, acetochlor, flufenacet, dimethenamid, S-dimethenamid, pethoxamid, flumetsulam, metosulam, pyridate, pyridafol, dicamba and salts thereof, procarbazone, glufosinate, fluthiacet, imazamox, imazethapyr, nicosulfuron, primisulfuron-methyl, rimsulfuron, halosulfuron, cloransulam, clomazone, diclosulam, 2,4-D, florasulam, flumiclorac, bromoxynil, sethoxydim, ioxynil, tepraloxydim, carfentrazone, clethodim, sulfentrazone, imazaquin, sulcotrione, imazapyr, mesotrione, thifensulfuron, isoxaflutole, prosulfuron, isoxachlortole, bentazone, iodosulfuron, prohexadione, diflufenzopyr, flurtamone, butylate, flumioxazin, fentrazamide, benzfendizone, isopropazole, fluazolate, aclonifen, tritosulfuron, cinidon-ethyl, mesotrione + terbuthylazine, metolachlor + terbuthylazine, S-metolachlor + terbuthylazine, paraquat, ketospiradox, aminopyralid, amicarbazone and azafenidin. The compositions according to the invention may also comprise a safener.

EP 1 652 432 A2

**Description**

The present invention relates to a novel herbicidal composition comprising a combination of herbicidal active ingredients that is suitable for selective weed control in crops of useful plants, such as, for example, in crops of maize. The invention further relates to a method for the control of weeds in crops of useful plants, and to use of that novel composition for that purpose.

The compound of formula I

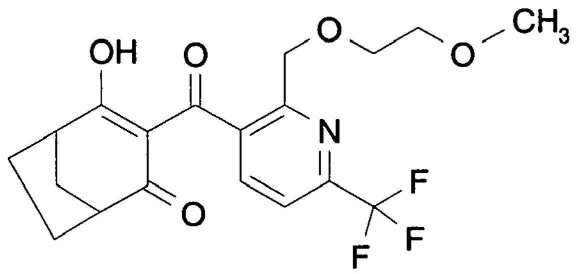

(I)

has herbicidal activity. The compound of formula I and the preparation thereof is known, for example, from WO 01/94339.

Surprisingly, it has now been found that a combination of variable amounts of active ingredients, that is to say, an active ingredient of formula I with one or more of the active ingredients listed below which are known and some of which are also commercially available, exhibits a synergistic action that is capable of controlling, both pre-emergence and post-emergence, the majority of weeds occurring especially in crops of useful plants.

According to the present invention, therefore, a novel synergistic composition for selective weed control is proposed that, in addition to comprising customary inert formulation adjuvants, comprises as active ingredient a mixture of

a) a herbicidally effective amount of the compound of formula I

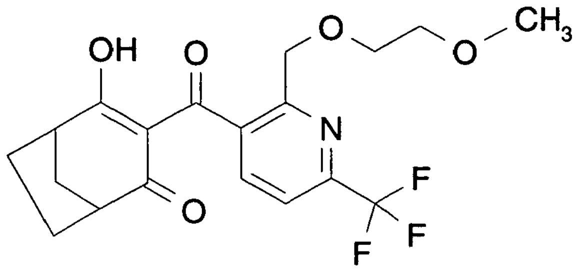

(I)

or an agronomically acceptable salt of that compound, and

b) a synergistically effective amount of one or more compounds selected from glyphosate and the potassium, isopropylammonium, sodium, trimesium, ammonium and diammonium salts thereof, simazine, terbutryn, ametryn, foramsulfuron, trifloxysulfuron, metolachlor, S-metolachlor, alachlor, acetochlor, flufenacet, dimethenamid, S-dimethenamid, pethoxamid, flumetsulam, metosulam, pyridate, pyridafol, dicamba and salts thereof, procarbazone, glufosinate, fluthiacet, imazamox, imazethapyr, nicosulfuron, primisulfuron-methyl, rimsulfuron, halosulfuron, cloransulam, clomazone, diclosulam, 2,4-D, florasulam, flumiclorac, bromoxynil, sethoxydim, ioxynil, tepraloxydim, carfentrazone, clethodim, sulfentrazone, imazaquin, sulcotrione, imazapyr, mesotrione, thifensulfuron, isoxaflutole, prosulfuron, isoxachlortole, bentazone, iodosulfuron, prohexadione, diflufenzopyr, flurtamone, butylate, flumioxazin, fentrazamide, benzfendizone, isopropazole, fluazolate, aclonifen, tritosulfuron, cinidon-ethyl, mesotrione + terbuthylazine, metolachlor + terbuthylazine, S-metolachlor + terbuthylazine, paraquat, ketospiradox, aminopyralid, amicarbazone and azafenidin.

The invention also includes the salts that the compound of formula I is able to form with amines, alkali metal and alkaline earth metal bases or quaternary ammonium bases. Among the alkali metal and alkaline earth metal hydroxides as salt formers, special mention should be made of the hydroxides of lithium, sodium, potassium, magnesium and calcium, but especially the hydroxides of sodium and potassium.

Examples of amines suitable for ammonium salt formation include ammonia as well as primary, secondary and

tertiary $C_1$-$C_{18}$alkylamines, $C_1$-$C_4$hydroxyalkylamines and $C_2$-$C_4$alkoxyalkylamines, for example methylamine, ethylamine, n-propylamine, isopropylamine, the four butylamine isomers, n-amylamine, isoamylamine, hexylamine, heptylamine, octylamine, nonylamine, decylamine, pentadecylamine, hexadecylamine, heptadecylamine, octadecylamine, methylethylamine, methylisopropylamine, methylhexylamine, methylnonylamine, methylpentadecylamine, methyloctadecylamine, ethylbutylamine, ethylheptylamine, ethyloctylamine, hexylheptylamine, hexyloctylamine, dimethylamine, diethylamine, di-n-propylamine, diisopropylamine, di-n-butylamine, di-n-amylamine, diisoamylamine, dihexylamine, diheptylamine, dioctylamine, ethanolamine, n-propanolamine, isopropanolamine, N,N-diethanolamine, N-ethylpropanolamine, N-butylethanolamine, allylamine, n-butenyl-2-amine, n-pentenyl-2-amine, 2,3-dimethylbutenyl-2-amine, dibutenyl-2amine, n-hexenyl-2-amine, propylenediamine, trimethylamine, triethylamine, tri-n-propylamine, triisopropylamine, tri-n-butylamine, triisobutylamine, tri-sec-butylamine, tri-n-amylamine, methoxyethylamine and ethoxyethylamine; heterocyclic amines, for example pyridine, quinoline, isoquinoline, morpholine, piperidine, pyrrolidine, indoline, quinuclidine and azepine; primary arylamines, for example anilines, methoxyanilines, ethoxyanilines, o-, m-and p-toluidines, phenylenediamines, benzidines, naphthylamines and o-, m- and p-chloro-anilines; but especially triethylamine, isopropylamine and diisopropylamine.

It is extremely surprising that the combination of the active ingredient of formula I with one or more active ingredients selected from glyphosate and the potassium, isopropylammonium, sodium, trimesium, ammonium and diammonium salts thereof, simazine, terbutryn, ametryn, foramsulfuron, trifloxysulfuron, metolachlor, S-metolachlor, alachlor, acetochlor, flufenacet, dimethenamid, S-dimethenamid, pethoxamid, flumetsulam, metosulam, pyridate, pyridafol, dicamba and salts thereof, procarbazone, glufosinate, fluthiacet, imazamox, imazethapyr, nicosulfuron, primisulfuron-methyl, rimsulfuron, halosulfuron, cloransulam, clomazone, diclosulam, 2,4-D, florasulam, flumiclorac, bromoxynil, sethoxydim, ioxynil, tepraloxydim, carfentrazone, clethodim, sulfentrazone, imazaquin, sulcotrione, imazapyr, mesotrione, thifensulfuron, isoxaflutole, prosulfuron, isoxachlortole, bentazone, iodosulfuron, prohexadione, diflufenzopyr, flurtamone, butylate, flumioxazin, fentrazamide, benzfendizone, isopropazole, fluazolate, aclonifen, tritosulfuron, cinidon-ethyl, mesotrione + terbuthylazine, metolachlor + terbuthylazine, S-metolachlor + terbuthylazine, paraquat, ketospiradox, aminopyralid, amicarbazone and azafenidin surpasses the additive action on the weeds to be controlled that is to be expected in principle, and thus broadens the range of action of the individual active ingredients especially in two respects: firstly, the rates of application of the individual compounds of formula I and glyphosate and the potassium, isopropylammonium, sodium, trimesium, ammonium and diammonium salts thereof, simazine, terbutryn, ametryn, foramsulfuron, trifloxysulfuron, metolachlor, S-metolachlor, alachlor, acetochlor, flufenacet, dimethenamid, S-dimethenamid, pethoxamid, flumetsulam, metosulam, pyridate, pyridafol, dicamba and salts thereof, procarbazone, glufosinate, fluthiacet, imazamox, imazethapyr, nicosulfuron, primisulfuron-methyl, rimsulfuron, halosulfuron, cloransulam, clomazone, diclosulam, 2,4-D, florasulam, flumiclorac, bromoxynil, sethoxydim, ioxynil, tepraloxydim, carfentrazone, clethodim, sulfentrazone, imazaquin, sulcotrione, imazapyr, mesotrione, thifensulfuron, isoxaflutole, prosulfuron, isoxachlortole, bentazone, iodosulfuron, prohexadione, diflufenzopyr, flurtamone, butylate, flumioxazin, fentrazamide, benzfendizone, isopropazole, fluazolate, aclonifen, tritosulfuron, cinidon-ethyl, paraquat, ketospiradox, aminopyralid, mesotrione + terbuthylazine, metolachlor + terbuthylazine, S-metolachlor + terbuthylazine, amicarbazone and azafenidin are reduced while a good level of action is maintained. Secondly, the composition according to the invention achieves a high degree of weed control even in cases where the compounds individually, when used at low rates of application, have become no longer useful from an agronomic standpoint. The result of this is a considerable broadening of the weed spectrum and an additional increase in selectivity for crops of useful plants, as is necessary and desirable in the case of inadvertent overdosage of the active ingredient. Furthermore, while maintaining outstanding control of weeds in useful plants, the composition according to the invention permits a greater flexibility with regard to subsequent crops.

The composition according to the invention can be used against a large number of agronomically important weeds, such as Stellaria, Nasturtium, Agrostis, Digitaria, Avena, Setaria, Sinapis, Lolium, Solanum, Phaseolus, Echinochloa, Scirpus, Monochoria, Sagittaria, Bromus, Alopecurus, Sorghum halepense, Rottboellia, Cyperus, Abutilon, Sida, Xanthium, Amaranthus, Chenopodium, Ipomoea, Chrysanthemum, Galium, Viola and Veronica, and against undesired volunteer crops. The composition according to the invention is suitable for all the methods of application usual in agriculture, such as pre-emergence application, post-emergence application and seed dressing. The composition according to the invention is suitable especially for weed control in crops of useful plants, such as cereals, rape, sugar beet, sugar cane, plantation crops, rice, maize and soybeans, and also for non-selective weed control.

Crops are to be understood as also including those which have been rendered tolerant towards herbicides or classes of herbicides (such as, for example, HPPD inhibitors, ALS inhibitors, EPSPS (5-enol-pyrovyl-shikimate-3-phosphate-synthase) inhibitors, GS (glutamine synthetase) inhibitors) by conventional methods of breeding or genetic engineering. An example of a crop that has been rendered tolerant to imidazolinones, e.g. imazamox, by conventional methods of breeding (mutagenesis) is Clearfield® summer rape (Canola). Examples of crops that have been rendered tolerant to herbicides or classes of herbicides by genetic engineering methods include glyphosate- and glufosinate-resistant maize varieties commercially available under the trade names RoundupReady® and LibertyLink®.

Crops are to be understood as also including those which have been rendered resistant to harmful insects by

genetic engineering methods, for example Bt maize (resistant to European corn borer), Bt cotton (resistant to cotton boll weevil) and also Bt potatoes (resistant to Colorado beetle). Examples of Bt maize are the Bt 176 maize hybrids of NK® (Syngenta Seeds). The Bt toxin is a protein that is formed naturally by *Bacillus thuringiensis* soil bacteria. Examples of toxins, or transgenic plants able to synthesise such toxins, are described in EP-A-0 451 878, EP-A-0 374 753, WO 93/07278, WO 95/34656 and EP-A-0 427 529.

Plant crops or the seed thereof may be tolerant towards herbicides and, at the same time, also resistant to insect feeding (stacked transgenic events). Seed may, for example, have the ability to express a Cyr3 protein and, at the same time, be tolerant towards glyphosate.

Preferred synergistic mixtures according to the invention comprise the following combinations of active ingredients:

| | | | | |
|---|---|---|---|---|
| compound of formula I | + | S-metolachlor | | |
| compound of formula I | + | S-metolachlor | + | mesotrione |
| compound of formula I | + | S-metolachlor | + | mesotrione + benoxacor |
| compound of formula I | + | S-metolachlor | + | mesotrione + terbuthylazine |
| compound of formula I | + | S-metolachlor | + | mesotrione + terbuthylazine + benoxacor |
| compound of formula I | + | S-metolachlor | + | benoxacor |
| compound of formula I | + | metolachlor | | |
| compound of formula I | + | metolachlor | + | benoxacor |
| compound of formula I | + | simazine | | |
| compound of formula I | + | terbutryn | | |
| compound of formula I | + | ametryn | | |
| compound of formula I | + | isoxaflutole | | |
| compound of formula I | + | nicosulfuron | | |
| compound of formula I | + | foramsulfuron | | |
| compound of formula I | + | foramsulfuron | + | isoxadifen |
| compound of formula I | + | primisulfuron-methyl | | |
| compound of formula I | + | sulcotrione | | |
| compound of formula I | + | trifloxysulfuron | | |
| compound of formula I | + | alachlor | | |
| compound of formula I | + | acetochlor | | |
| compound of formula I | + | flufenacet | | |
| compound of formula I | + | S-dimethenamid | | |
| compound of formula I | + | dimethenamid | | |
| compound of formula I | + | pethoxamid | | |
| compound of formula I | + | flumetsulam | | |
| compound of formula I | + | metosulam | | |
| compound of formula I | + | pyridate | | |
| compound of formula I | + | pyridafol | | |
| compound of formula I | + | dicamba | | |
| compound of formula I | + | dicamba-sodium | | |
| compound of formula I | + | dicamba-potassium | | |
| compound of formula I | + | dicamba-dimethylammonium | | |
| compound of formula I | + | dicamba-diolamine | | |
| compound of formula I | + | procarbazone | | |
| compound of formula I | + | L-glufosinate | | |
| compound of formula I | + | glufosinate | | |
| compound of formula I | + | fluthiacet | | |

Table continued

| | | |
|---|---|---|
| compound of formula I | + | imazamox |
| compound of formula I | + | imazethapyr |
| compound of formula I | + | rimsulfuron |
| compound of formula I | + | halosulfuron |
| compound of formula I | + | cloransulam |
| compound of formula I | + | flumiclorac |
| compound of formula I | + | clomazone |
| compound of formula I | + | diclosulam |
| compound of formula I | + | 2,4-D |
| compound of formula I | + | florasulam |
| compound of formula I | + | bromoxynil |
| compound of formula I | + | sethoxydim |
| compound of formula I | + | ioxynil |
| compound of formula I | + | tepraloxydim |
| compound of formula I | + | carfentrazone |
| compound of formula I | + | clethodim |
| compound of formula I | + | sulfentrazone |
| compound of formula I | + | imazaquin |
| compound of formula I | + | imazapyr |
| compound of formula I | + | mesotrione |
| compound of formula I | + | thifensulfuron |
| compound of formula I | + | prosulfuron |
| compound of formula I | + | isoxachlortole |
| compound of formula I | + | bentazone |
| compound of formula I | + | iodosulfuron |
| compound of formula I | + | isoxadifene |
| compound of formula I | + | prohexadione |
| compound of formula I | + | diflufenzopyr |
| compound of formula I | + | flurtamone |
| compound of formula I | + | butylate |
| compound of formula I | + | flumioxazin |
| compound of formula I | + | fentrazamide |
| compound of formula I | + | benzfendizone |
| compound of formula I | + | isopropazole |
| compound of formula I | + | fluazolate |
| compound of formula I | + | aclonifen |
| compound of formula I | + | tritosulfuron |
| compound of formula I | + | cinidon-ethyl |
| compound of formula I | + | glyphosate |
| compound of formula I | + | glyphosatediammonium |
| compound of formula I | + | glyphosate potassium salt |
| compound of formula I | + | glyphosate trimesium salt |
| compound of formula I | + | glyphosate ammonium salt |
| compound of formula I | + | glyphosate sodium salt |
| compound of formula I | + | glyphosate isopropylammonium salt |
| compound of formula I | + | paraquat |

Table continued

| | | |
|---|---|---|
| compound of formula I | + | azafenidin |
| compound of formula I | + | ketospiradox |
| compound of formula I | + | aminopyralid |
| compound of formula I | + | amicarbazone |

The following compounds of the composition according to the invention are described in The Pesticide Manual, 12th ed., British Crop Protection Council, 2000:

| Name | Pesticide Manual 12th ed., Entry No.: |
|---|---|
| S-metolachlor | 530 |
| metolachlor | 529 |
| mesotrione | 500 |
| simazine | 698 |
| terbutryn | 740 |
| ametryn | 22 |
| isoxaflutole | 467 |
| nicosulfuron | 560 |
| primisulfuron-methyl | 633 |
| sulcotrione | 710 |
| alachlor | 16 |
| acetochlor | 7 |
| flufenacet | 362 |
| S-dimethenamid | 254 |
| dimethenamid | 254 |
| flumetsulam | 366 |
| metosulam | 533 |
| pyridate | 672 |
| dicamba | 222 |
| procarbazone | 541 |
| glufosinate | 406 |
| fluthiacet | 385 |
| imazamox | 439 |
| imazethapyr | 443 |
| rimsulfuron | 689 |
| halosulfuron | 414 |
| cloransulam | 164 |
| flumiclorac | 367 |
| clomazone | 159 |
| diclosulam | 235 |
| 2,4-D | 205 |
| florasulam | 351 |
| bromoxynil | 93 |
| sethoxydim | 694 |
| ioxynil | 455 |
| tepraloxydim | 735 |
| carfentrazone | 119 |
| clethodim | 155 |
| sulfentrazone | 711 |
| imazaquin | 442 |
| imazapyr | 441 |
| mesotrione | 500 |

Table continued

| Name | Pesticide Manual 12th ed., Entry No.: |
|---|---|
| thifensulfuron | 754 |
| prosulfuron | 657 |
| bentazone | 69 |
| iodosulfuron | 454 |
| prohexadione | 639 |
| diflufenzopyr | 246 |
| flurtamone | 382 |
| butylate | 106 |
| flumioxazin | 368 |
| fentrazamide | 340 |
| fluazolate | 355 |
| aclonifen | 10 |
| cinidon-ethyl | 152 |
| glyphosate | 407 |
| paraquat | 592 |
| azafenidin | 43 |
| terbuthylazine | 739 |
| amicarbazone | 23 |

Isopropazole (5-[4-bromo-1-methyl-5-(trifluoromethyl)-1H-pyrazol-3-yl]-2-chloro-4-fluorobenzoic acid isopropyl ester) is known from Moss, S. R. and M. Rooke S. 1997. **Activity of JV 485, a protoporphyrinogen oxidase inhibitor, on herbicide-resistant black-grass (Alopecurus myosuroides).** *1997 Brighton crop protection conference: weeds. Proceedings of an international conference, Brighton, UK, 17-20 November 1997.* **1:** 337-342.

Benzfendizone (2-(5-ethyl-2-{4-[1,2,3,6-tetrahydro-3-methyl-2,6-dioxo-4-(trifluoromethyl)-pyrimidin-1-yl]phenoxymethyl}phenoxy)propionic acid ethyl ester is registered under Chemical Abstracts No. 158755-95-4. Pethoxamid (2-chloro-*N*-(2-ethoxyethyl)-*N*-(2-methy)-1-phenylprop-1-enyl)acetamide) is registered under Chemical Abstracts No. 106700-29-2. Pyridafol (6-chloro-3-phenylpyridazin-4-ol) is described under Chemical Abstracts No. 40020-01-7. Isoxachlortole (4-chloro-2-mesylphenyl 5-cyclopropyl-1,2-oxazol-4-yl ketone) is registered under Chemical Abstracts No. 141112-06-3. Tritosulfuron (*N*-[[[4-methoxy-6-(trifluoromethyl)-1,3,5-triazin-2-yl]amino]carbonyl]-2-(trifluoromethyl)benzenesulfonamide) is described under Chemical Abstracts No. 142469-14-5 and is also known from EP-A-559 814. Trifloxysulfuron is used especially preferably in the form of the sodium salt (Chemical Abstracts No. 199119-58-9), especially in hydrated form as referred to as the B-modification in WO 00/52006. Glufosinate is preferably used according to the invention in the form of salts, especially in the form of the ammonium salt. Especially preferably, the L-isomer of glufosinate is used. Prohexadione is preferably used in the form of the potassium salt, and procarbazone in the form of the sodium salt. Fluthiacet, thifensulfuron, iodosulfuron, cloransulam and halosulfuron are used especially in the form of the methyl ester. Carfentrazone is used in the form of the ethyl ester. Flumiclorac is used in the form of the pentyl ester. Foramsulfuron is described, for example, in WO 95/29899. Ketospiradox is described in Chemical Abstracts under Register No. CAS 192708-91-1, and aminopyralid is known from AGROW (2002) Newsletter, 4th September 2002.

The composition according to the invention comprises the active ingredient of formula I and one or more of the active ingredients selected from glyphosate and the potassium, isopropylammonium, sodium, trimesium, ammonium and diammonium salts thereof, simazine, terbutryn, ametryn, foramsulfuron, trifloxysulfuron, metolachlor, S-metolachlor, alachlor, acetochlor, flufenacet, dimethenamid, S-dimethenamid, pethoxamid, flumetsulam, metosulam, pyridate, pyridafol, dicamba and salts thereof, procarbazone, glufosinate, fluthiacet, imazamox, imazethapyr, nicosulfuron, primisulfuron-methyl, rimsulfuron, halosulfuron, cloransulam, clomazone, diclosulam, 2,4-D, florasulam, flumiclorac, bromoxynil, sethoxydim, ioxynil, tepraloxydim, carfentrazone, clethodim, sulfentrazone, imazaquin, sulcotrione, imazapyr, mesotrione, thifensulfuron, isoxaflutole, prosulfuron, isoxachlortole, bentazone, iodosulfuron, prohexadione, diflufenzopyr, flurtamone, butylate, flumioxazin, fentrazamide, benzfendizone, isopropazole, fluazolate, aclonifen, tritosulfuron, cinidon-ethyl, mesotrione + terbuthylazine, metolachlor + terbuthylazine, S-metolachlor + terbuthylazine, paraquat, ketospiradox, aminopyralid, amicarbazone and azafenidin in any desired mixing ratio, usually with an excess of one component over the other components. The mixing ratios (by weight) between the active ingredient of formula I and the mixing partners glyphosate and the potassium, isopropylammonium, sodium, trimesium, ammonium and diammonium salts thereof, simazine, terbutryn, ametryn, foramsulfuron, trifloxysulfuron, metolachlor, S-metolachlor, alachlor, acetochlor, flufenacet, dimethenamid, S-dimethenamid, pethoxamid, flumetsulam, metosulam, pyridate, pyridafol, dicamba and salts thereof,

procarbazone, glufosinate, fluthiacet, imazamox, imazethapyr, nicosulfuron, primisulfuron-methyl, rimsulfuron, halosulfuron, cloransulam, clomazone, diclosulam, 2,4-D, florasulam, flumiclorac, bromoxynil, sethoxydim, ioxynil, tepraloxydim, carfentrazone, clethodim, sulfentrazone, imazaquin, sulcotrione, imazapyr, mesotrione, thifensulfuron, isoxaflutole, prosulfuron, isoxachlortole, bentazone, iodosulfuron, prohexadione, diflufenzopyr, flurtamone, butylate, flumioxazin, fentrazamide, benzfendizone, isopropazole, fluazolate, aclonifen, tritosulfuron, cinidon-ethyl, mesotrione + terbuthylazine, metolachlor + terbuthylazine, S-metolachlor + terbuthylazine, paraquat, ketospiradox, aminopyralid, amicarbazone and azafenidin are generally from 1:2000 to 2000:1, especially from 200:1 to 1:200.

The rate of application can vary within a wide range and depends on the nature of the soil, the type of application (pre- or post-emergence; seed dressing; application to the seed furrow; no tillage application etc.), on the cultivated plant, the weed to be controlled, the prevailing climatic conditions and on other factors determined by the type of application, the time of application and the target crop. In general, the active ingredient mixture according to the invention may be used at a rate of application of from 1 to 5000 g of active ingredient mixture/ha.

The mixtures of the compound of formula I with the compounds glyphosate and the potassium, isopropylammonium, sodium, trimesium, ammonium and diammonium salts thereof, simazine, terbutryn, ametryn, foramsulfuron, trifloxysulfuron, metolachlor, S-metolachlor, alachlor, acetochlor, flufenacet, dimethenamid, S-dimethenamid, pethoxamid, flumetsulam, metosulam, pyridate, pyridafol, dicamba and salts thereof, procarbazone, glufosinate, fluthiacet, imazamox, imazethapyr, nicosulfuron, primisulfuron-methyl, rimsulfuron, halosulfuron, cloransulam, clomazone, diclosulam, 2,4-D, florasulam, flumiclorac, bromoxynil, sethoxydim, ioxynil, tepraloxydim, carfentrazone, clethodim, sulfentrazone, imazaquin, sulcotrione, imazapyr, mesotrione, thifensulfuron, isoxaflutole, prosulfuron, isoxachlortole, bentazone, iodosulfuron, prohexadione, diflufenzopyr, flurtamone, butylate, flumioxazin, fentrazamide, benzfendizone, isopropazole, fluazolate, aclonifen, tritosulfuron, cinidon-ethyl, mesotrione + terbuthylazine, metolachlor + terbuthylazine, S-metolachlor + terbuthylazine, paraquat, ketospiradox, aminopyralid, amicarbazone and azafenidin can be used in unmodified form, i.e. as obtainable from synthesis. Preferably, however, they are formulated in customary manner with the adjuvants conventionally employed in formulation technology, such as solvents, solid carriers or surfactants, into e.g. emulsifiable concentrates, directly sprayable or dilutable solutions, dilute emulsions, combinations of suspension and emulsion (suspoemulsions), wettable powders, soluble powders, dusts, granules or microcapsules. As with the nature of the compositions, the methods of application, such as spraying, atomising, dusting, wetting, scattering or pouring, are chosen in accordance with the intended objectives and the prevailing circumstances.

The formulations, i.e. the compositions, preparations or mixtures comprising the compounds (active ingredients) of formula I and glyphosate and the potassium, isopropylammonium, sodium, trimesium, ammonium and diammonium salts thereof, simazine, terbutryn, ametryn, foramsulfuron, trifloxysulfuron, metolachlor, S-metolachlor, alachlor, acetochlor, flufenacet, dimethenamid, S-dimethenamid, pethoxamid, flumetsulam, metosulam, pyridate, pyridafol, dicamba and salts thereof, procarbazone, glufosinate, fluthiacet, imazamox, imazethapyr, nicosulfuron, primisulfuron-methyl, rimsulfuron, halosulfuron, cloransulam, clomazone, diclosulam, 2,4-D, florasulam, flumiclorac, bromoxynil, sethoxydim, ioxynil, tepraloxydim, carfentrazone, clethodim, sulfentrazone, imazaquin, sulcotrione, imazapyr, mesotrione, thifensulfuron, isoxaflutole, prosulfuron, isoxachlortole, bentazone, iodosulfuron, prohexadione, diflufenzopyr, flurtamone, butylate, flumioxazin, fentrazamide, benzfendizone, isopropazole, fluazolate, aclonifen, tritosulfuron, cinidon-ethyl, mesotrione + terbuthylazine, metolachlor + terbuthylazine, S-metolachlor + terbuthylazine, paraquat, ketospiradox, aminopyralid, amicarbazone and azafenidin and, where appropriate, one or more solid or liquid formulation adjuvants, are prepared in a manner known *per se,* e.g. by homogeneously mixing and/or grinding the active ingredients with the formulation adjuvants, e.g. solvents or solid carriers. In addition, surface-active compounds (surfactants) can also be used in the preparation of the formulations.

Examples of solvents and solid carriers are given, for example, on page 6 of WO 97/34485.

Depending on the nature of the compound of formula I to be formulated, suitable surface-active compounds are non-ionic, cationic and/or anionic surfactants and mixtures of surfactants having good emulsifying, dispersing and wetting properties.

Examples of suitable anionic, non-ionic and cationic surfactants are listed, for example, on pages 7 and 8 of WO 97/34485.

The surfactants customarily employed in formulation technology, which are described *inter alia* in "McCutcheon's Detergents and Emulsifiers Annual" MC Publishing Corp., Ridgewood New Jersey, 1981, Stache, H., "Tensid-Taschenbuch", Carl Hanser Verlag, Munich/Vienna, 1981 and M. and J. Ash, "Encyclopedia of Surfactants", Vol I-III, Chemical Publishing Co., New York, 1980-81, are also suitable for the preparation of the herbicidal compositions according to the invention.

The compositions according to the invention can additionally include an additive comprising an oil of vegetable or animal origin, a mineral oil, alkyl esters thereof or mixtures of such oils and oil derivatives.

The amounts of oil additive in the composition according to the invention are generally from 0.01 to 2 %, based on the spray mixture. For example, the oil additive can be added to the spray tank in the desired concentration after the spray mixture has been prepared.

Preferred oil additives comprise mineral oils or an oil of vegetable origin, for example rapeseed oil, olive oil or sunflower oil, emulsified vegetable oil, such as AMIGO® obtainable from Rhône-Poulenc Canada Inc., alkyl esters of oils of vegetable origin, for example the methyl derivatives, or an oil of animal origin, such as fish oil or beef tallow. Special preference is given to "Additive Type A" which essentially comprises as active components 80 % by weight alkyl esters of fish oils and 15 % by weight of methylated rapeseed oil, and also 5 % by weight of customary emulsifiers and pH modifiers.

Especially preferred oil additives comprise alkyl esters of higher fatty acids ($C_8$-$C_{22}$), especially the methyl derivatives of $C_{12}$-$C_{18}$fatty acids, for example the methyl esters of lauric acid, palmitic acid and oleic acid. Those esters are known as methyl laurate (CAS-111-82-0), methyl palmitate (CAS-112-39-0) and methyl oleate (CAS-112-62-9). A preferred fatty acid methyl ester derivative is Emery® 2230 and 2231 (Henkel subsidiary Cognis GMBH, DE).

The application and action of the oil additives can be improved by combining them with surface-active substances, such as non-ionic, anionic or cationic surfactants. Examples of suitable anionic, non-ionic and cationic surfactants are listed on pages 7 and 8 of WO 97/34485.

Preferred surface-active substances are anionic surfactants of the dodecylbenzylsulfonate type, especially the calcium salts thereof, and also non-ionic surfactants of the fatty alcohol ethoxylate type. Special preference is given to ethoxylated $C_{12}$-$C_{22}$fatty alcohols having a degree of ethoxylation of from 5 to 40. Examples of commercially available, preferred surfactants are the Genapol types (Clariant AG, Muttenz, Switzerland).

The concentration of surface-active substances in relation to the total additive is generally from 1 to 30 % by weight.

Also preferred for use as surface-active substances are silicone surfactants, especially polyalkyl-oxide-modified heptamethyltrisiloxanes, such as are commercially available as e.g. Silwet L-77®, and also perfluorinated surfactants.

Examples of oil additives that consist of mixtures of oils or mineral oils or derivatives thereof with surfactants are Edenor ME SU®, Turbocharge® (Zeneca Agro, Stoney Creek, Ontario, CA) or, especially preferably, Actripron® (BP Oil UK Limited, GB).

The addition of an organic solvent to the oil additive/surfactant mixture can also bring about a further enhancement of action. Suitable solvents are, for example, Solvesso® (ESSO) and Aromatic Solvent® (Exxon Corporation) types. The concentration of such solvents can be from 10 to 80 % by weight of the total weight.

Such oil additives, which are also described, for example, in US-A-4 834 908, are especially preferred for the composition according to the invention. A most especially preferred oil additive is known by the name MERGE®, is obtainable from the BASF Corporation and is essentially described, for example, in US-A-4 834 908 in col. 5, as Example COC-1. A further oil additive that is preferred according to the invention is SCORE® (Novartis Crop Protection Canada.)

In addition to the oil additives listed above, in order to enhance the action of the compositions according to the invention it is also possible for formulations of alkyl pyrrolidones, such as are commercially available e.g. as Agrimax®, to be added to the spray mixture. Formulations of synthetic latices, such as, for example, polyacrylamide, polyvinyl compounds or poly-1-p-menthene, such as are commercially available as e.g. Bond®, Courier® or Emerald®, can also be used to enhance action. Solutions that contain propionic acid, for example Eurogkem Pen-e-trate®, can also be added as action-enhancing agents to the spray mixture.

The herbicidal formulations generally contain from 0.1 to 99 % by weight, especially from 0.1 to 95 % by weight, of active ingredient mixture of the compound of formula I with the compounds glyphosate and the potassium, isopropylammonium, sodium, trimesium, ammonium and diammonium salts thereof, simazine, terbutryn, ametryn, foramsulfuron, trifloxysulfuron, metolachlor, S-metolachlor, alachlor, acetochlor, flufenacet, dimethenamid, S-dimethenamid, pethoxamid, flumetsulam, metosulam, pyridate, pyridafol, dicamba and salts thereof, procarbazone, glufosinate, fluthiacet, imazamox, imazethapyr, nicosulfuron, primisulfuron-methyl, rimsulfuron, halosulfuron, cloransulam, clomazone, diclosulam, 2,4-D, florasulam, flumiclorac, bromoxynil, sethoxydim, ioxynil, tepraloxydim, carfentrazone, clethodim, sulfentrazone, imazaquin, sulcotrione, imazapyr, mesotrione, thifensulfuron, isoxaflutole, prosulfuron, isoxachlortole, bentazone, iodosulfuron, prohexadione, diflufenzopyr, flurtamone, butylate, flumioxazin, fentrazamide, benzfendizone, isopropazole, fluazolate, aclonifen, tritosulfuron, cinidon-ethyl, mesotrione + terbuthylazine, metolachlor + terbuthylazine, S-metolachlor + terbuthylazine, paraquat, ketospiradox, aminopyralid, amicarbazone and azafenidin, from 1 to 99.9 % by weight of a solid or liquid formulation adjuvant, and from 0 to 25 % by weight, especially from 0.1 to 25 % by weight, of a surfactant.

Whereas commercial products will preferably be formulated as concentrates, the end user will normally employ dilute formulations. The compositions may also comprise further ingredients, such as stabilisers, for example vegetable oils or epoxidised vegetable oils (epoxidised coconut oil, rapeseed oil or soybean oil), anti-foams, for example silicone oil, preservatives, viscosity regulators, binders, tackifiers, and also fertilisers or other active ingredients. The compositions according to the invention are preferably used in the presence of a nitrogen source. Such nitrogen sources are described, for example, in EP-A-0 584 227. A suitable nitrogen source is **NITRO-30® SRN** (30-0-0; 10.38 lbs/gal, 3.1 lbs of N/gal), a slow-release nitrogen-containing solution with a content of 85 % nitrogen in the form of methylene urea. NITRO-30® is commercially available and can be obtained, for example, from Monterey Chemical Co. Fresno, CA 93745-5000, USA.

Preferred formulations have especially the following compositions (% = percent by weight):

| Emulsifiable concentrates: | |
|---|---|
| active ingredient mixture: | 1 to 90 %, preferably 5 to 20 % |
| surfactant: | 1 to 30 %, preferably 10 to 20 % |
| liquid carrier: | 5 to 94 %, preferably 70 to 85 % |

| Dusts: | |
|---|---|
| active ingredient mixture: | 0.1 to 10 %, preferably 0.1 to 5 % |
| solid carrier: | 99.9 to 90 %, preferably 99.9 to 99 % |

| Suspension concentrates: | |
|---|---|
| active ingredient mixture: | 5 to 75 %, preferably 10 to 50 % |
| water: | 94 to 24 %, preferably 88 to 30 % |
| surfactant: | 1 to 40 %, preferably 2 to 30 % |

| Wettable powders: | |
|---|---|
| active ingredient mixture: | 0.5 to 90 %, preferably 1 to 80 % |
| surfactant: | 0.5 to 20 %, preferably 1 to 15 % |
| solid carrier: | 5 to 95 %, preferably 15 to 90 % |

| Granules: | |
|---|---|
| active ingredient mixture: | 0.1 to 30 %, preferably 0.1 to 15 % |
| solid carrier: | 99.5 to 70 %, preferably 97 to 85 % |

The following Examples further illustrate, but do not limit, the invention.

| F1. Emulsifiable concentrates | a) | b) | c) | d) |
|---|---|---|---|---|
| active ingredient mixture | 5 % | 10 % | 25 % | 50 % |
| calcium dodecylbenzenesulfonate | 6 % | 8 % | 6 % | 8 % |
| castor oil polyglycol ether (36 mol of ethylene oxide) | 4 % | - | 4 % | 4 % |
| octylphenol polyglycol ether (7-8 mol of ethylene oxide) | - | 4 % | - | 2 % |
| cyclohexanone | - | - | 10 % | 20 % |
| arom. hydrocarbon mixture $C_9$-$C_{12}$ | 85 % | 78 % | 55 % | 16 % |

Emulsions of any desired concentration can be obtained from such concentrates by dilution with water.

| F2. Solutions | a) | b) | c) | d) |
|---|---|---|---|---|
| active ingredient mixture | 5% | 10 % | 50 % | 90 % |
| 1-methoxy-3-(3-methoxypropoxy)-propane | - | 20 % | 20 % | - |
| polyethylene glycol mol. wt. 400 | 20 % | 10 % | - | - |
| N-methyl-2-pyrrolidone | - | - | 30 % | 1 0 % |
| arom. hydrocarbon mixture $C_9$-$C_{12}$ | 75 % | 60 % | - | - |

The solutions are suitable for application in the form of microdrops.

| F3. Wettable powders | a) | b) | c) | d) |
|---|---|---|---|---|
| active ingredient mixture | 5 % | 25 % | 50 % | 80 % |
| sodium lignosulfonate | 4 % | - | 3 % | - |
| sodium lauryl sulfate | 2 % | 3 % | - | 4 % |
| sodium diisobutylnaphthalenesulfonate | - | 6 % | 5 % | 6 % |
| octylphenol polyglycol ether (7-8 mol of ethylene oxide) | - | 1 % | 2 % | - |
| highly disperse silicic acid | 1 % | 3 % | 5 % | 10 % |
| kaolin | 88 % | 62 % | 35 % | - |

The active ingredient is thoroughly mixed with the adjuvants and the mixture is thoroughly ground in a suitable mill, yielding wettable powders which can be diluted with water to give suspensions of any desired concentration.

| F4. Coated granules | a) | b) | c) |
|---|---|---|---|
| active ingredient mixture | 0.1 % | 5 % | 15 % |
| highly disperse silicic acid | 0.9 % | 2 % | 2 % |
| inorg. carrier (diameter 0.1 - 1 mm) e.g. $CaCO_3$ or $SiO_2$ | 99.0 % | 93 % | 83 % |

The active ingredient is dissolved in methylene chloride, the solution is sprayed onto the carrier and the solvent is subsequently evaporated off *in vacuo.*

| F5. Coated granules | a) | b) | c) |
|---|---|---|---|
| active ingredient mixture | 0.1 % | 5 % | 15 % |
| polyethylene glycol mol. wt. 200 | 1.0 % | 2 % | 3 % |
| highly disperse silicic acid | 0.9 % | 1 % | 2 % |
| inorg. carrier (diameter 0.1 - 1 mm) e.g. $CaCO_3$ or $SiO_2$ | 98.0 % | 92 % | 80 % |

The finely ground active ingredient is applied uniformly, in a mixer, to the carrier moistened with polyethylene glycol. Non-dusty coated granules are obtained in this manner.

| F6. Extruder granules | a) | b) | c) | d) |
|---|---|---|---|---|
| active ingredient mixture | 0.1 % | 3 % | 5 % | 15 % |
| sodium lignosulfonate | 1.5 % | 2 % | 3 % | 4% |
| carboxymethylcellulose | 1.4 % | 2 % | 2 % | 2 % |
| kaolin | 97.0 % | 93 % | 90 % | 79 % |

The active ingredient is mixed and ground with the adjuvants and the mixture is moistened with water. The resulting mixture is extruded and then dried in a stream of air.

| F7. Dusts | a) | b) | c) |
|---|---|---|---|
| active ingredient mixture | 0.1 % | 1 % | 5 % |
| talcum | 39.9 % | 49 % | 35 % |
| kaolin | 60.0 % | 50 % | 60 % |

Ready-to-use dusts are obtained by mixing the active ingredient with the carriers and grinding the mixture in a suitable mill.

| F8. Suspension concentrates | a) | b) | c) | d) |
|---|---|---|---|---|
| active ingredient mixture | 3 % | 10 % | 25 % | 50 % |
| ethylene glycol | 5 % | 5 % | 5 % | 5 % |
| nonylphenol polyglycol ether (15 mol of ethylene oxide) | - | 1 % | 2 % | - |

Table continued

| F8. Suspension concentrates | a) | b) | c) | d) |
|---|---|---|---|---|
| sodium lignosulfonate | 3 % | 3 % | 4 % | 5 % |
| carboxymethylcellulose | 1 % | 1 % | 1 % | 1 % |
| 37% aqueous formaldehyde solution | 0.2 % | 0.2 % | 0.2 % | 0.2 % |
| silicone oil emulsion | 0.8 % | 0.8 % | 0.8 % | 0.8 % |
| water | 87 % | 79 % | 62 % | 38 % |

The finely ground active ingredient is intimately mixed with the adjuvants, yielding a suspension concentrate from which suspensions of any desired concentration can be obtained by dilution with water.

It is often more practical for the active ingredient of formula I and the mixing partner(s) selected from glyphosate and the potassium, isopropylammonium, sodium, trimesium, ammonium and diammonium salts thereof, simazine, terbutryn, ametryn, foramsulfuron, trifloxysulfuron, metolachlor, S-metolachlor, alachlor, acetochlor, flufenacet, dimethenamid, S-dimethenamid, pethoxamid, flumetsulam, metosulam, pyridate, pyridafol, dicamba and salts thereof, procarbazone, glufosinate, fluthiacet, imazamox, imazethapyr, nicosulfuron, primisulfuron-methyl, rimsulfuron, halosulfuron, cloransulam, clomazone, diclosulam, 2,4-D, florasulam, flumiclorac, bromoxynil, sethoxydim, ioxynil, tepraloxydim, carfentrazone, clethodim, sulfentrazone, imazaquin, sulcotrione, imazapyr, mesotrione, thifensulfuron, isoxaflutole, prosulfuron, isoxachlortole, bentazone, iodosulfuron, prohexadione, diflufenzopyr, flurtamone, butylate, flumioxazin, fentrazamide, benzfendizone, isopropazole, fluazolate, aclonifen, tritosulfuron, cinidon-ethyl, mesotrione + terbuthylazine, metolachlor + terbuthylazine, S-metolachlor + terbuthylazine, paraquat, ketospiradox, aminopyralid, amicarbazone and azafenidin to be formulated separately and then to be combined in the applicator in the desired mixing ratio in the form of a "tank mixture" in water shortly before application.

The compositions according to the invention may additionally comprise growth regulators, such as, for example, trinexapac (744), chlormequat chloride (129), clofencet (148), cyclanilide (170), ethephon (281), flurprimidol (355), gibberellic acid (379), inabenfide (421), maleic hydrazide (449), mefluidide (463), mepiquat chloride (465), paclobutrazol (548), prohexadione-calcium (595), uniconazole (746) or thidiazuron (703). The composition according to the invention may also comprise fungicides, such as, for example, azoxystrobin (43), epoxiconazole (48), benomyl (60), bromuconazole (89), bitertanol (77), carbendazim (107), cyproconazole (189), cyprodinil (190), diclomezine (220), difenoconazole (228), diniconazole (247), epoxiconazole (48), ethirimol (284), etridiazole (294), fenarimol (300), fenbuconazole (302), fenpiclonil (311), fenpropidin (313), fenpropimorph (314), ferimzone (321), fludioxonil (334), fluquinconazole (349), flutolanil (360), flutriafol (361), imazalil (410), ipconazole (426), iprodione (428), isoprothiolane (432), kasugamycin (438), kresoxim-methyl (439), spiroxamine (441), mepronil (466), myclobutanil (505), nuarimol (528), pefurazoate (554), pencycuron (556), phthalide (576), probenazole (590), prochloraz (591), propiconazole (607), pyrazophos (619), pyroquilon (633), quinoxyfen (638), quintozene (639), tebuconazole (678), tetraconazole (695), thiabendazole (701), thifluzamide (705), triadimefon (720), triadimenol (721), tricyclazole (734), tridemorph (736), triflumizole (738), triforine (742), triticonazole (745) or vinclozolin (751). The number given in brackets after each active ingredient refers to the Entry No. of the respective active ingredients in The Pesticide Manual, 11$^{th}$ ed., British Crop Protection Council, 1997.

Biological Examples:

A synergistic effect exists whenever the action of the active ingredient combination of the compound of formula I and one or more active ingredients selected from glyphosate and the potassium, isopropylammonium, sodium, trimesium, ammonium and diammonium salts thereof,simazine, terbutryn, ametryn, foramsulfuron, trifloxysulfuron, metolachlor, S-metolachlor, alachlor, acetochlor, flufenacet, dimethenamid, S-dimethenamid, pethoxamid, flumetsulam, metosulam, pyridate, pyridafol, dicamba and salts thereof, procarbazone, glufosinate, fluthiacet, imazamox, imazethapyr, nicosulfuron, primisulfuron-methyl, rimsulfuron, halosulfuron, cloransulam, clomazone, diclosulam, 2,4-D, florasulam, flumiclorac, bromoxynil, sethoxydim, ioxynil, tepraloxydim, carfentrazone, clethodim, sulfentrazone, imazaquin, sulcotrione, imazapyr, mesotrione, thifensulfuron, isoxaflutole, prosulfuron, isoxachlortole, bentazone, iodosulfuron, prohexadione, diflufenzopyr, flurtamone, butylate, flumioxazin, fentrazamide, benzfendizone, isopropazole, fluazolate, aclonifen, tritosulfuron, cinidon-ethyl, mesotrione + terbuthylazine, metolachlor + terbuthylazine, S-metolachlor + terbuthylazine, paraquat, ketospiradox, aminopyralid, amicarbazone and azafenidin is greater than the sum of the actions of the active ingredients applied individually.

The herbicidal action to be expected, We, for a given combination of two herbicides can be calculated as follows (see COLBY, S.R. "Calculating synergistic and antagonistic response of herbicide combinations". Weeds 15, pages 20-22; 1967):

$$We = X + [Y \bullet (100 - X)/100]$$

wherein:

X = % herbicidal action in the case of treatment with the compound of formula I using an application rate of p kg per hectare, in comparison with untreated control (= 0%).

Y = % herbicidal action in the case of treatment with a compound selected from glyphosate and the potassium, isopropylammonium, sodium, trimesium, ammonium and diammonium salts thereof, simazine, terbutryn, ametryn, foramsulfuron, trifloxysulfuron, metolachlor, S-metolachlor, alachlor, acetochlor, flufenacet, dimethenamid, S-dimethenamid, pethoxamid, flumetsulam, metosulam, pyridate, pyridafol, dicamba and salts thereof, procarbazone, glufosinate, fluthiacet, imazamox, imazethapyr, nicosulfuron, primisulfuron-methyl, rimsulfuron, halosulfuron, cloransulam, clomazone, diclosulam, 2,4-D, florasulam, flumiclorac, bromoxynil, sethoxydim, ioxynil, tepraloxydim, carfentrazone, clethodim, sulfentrazone, imazaquin, sulcotrione, imazapyr, mesotrione, thifensulfuron, isoxaflutole, prosulfuron, isoxachlortole, bentazone, iodosulfuron, prohexadione, diflufenzopyr, flurtamone, butylate, flumioxazin, fentrazamide, benzfendizone, isopropazole, fluazolate, aclonifen, tritosulfuron, cinidon-ethyl, mesotrione + terbuthylazine, metolachlor + terbuthylazine, S-metolachlor + terbuthylazine, paraquat, ketospiradox, aminopyralid, amicarbazone and azafenidin, using an application rate of q kg per hectare, in comparison with untreated control.

We = expected herbicidal action (% herbicidal action in comparison with untreated control) after treatment with the compound of formula I and a compound selected from glyphosate and the potassium, isopropylammonium, sodium, trimesium, ammonium and diammonium salts thereof, simazine, terbutryn, ametryn, foramsulfuron, trifloxysulfuron, metolachlor, S-metolachlor, alachlor, acetochlor, flufenacet, dimethenamid, S-dimethenamid, pethoxamid, flumetsulam, metosulam, pyridate, pyridafol, dicamba and salts thereof, procarbazone, glufosinate, fluthiacet, imazamox, imazethapyr, nicosulfuron, primisulfuron-methyl, rimsulfuron, halosulfuron, cloransulam, clomazone, diclosulam, 2,4-D, florasulam, flumiclorac, bromoxynil, sethoxydim, ioxynil, tepraloxydim, carfentrazone, clethodim, sulfentrazone, imazaquin, sulcotrione, imazapyr, mesotrione, thifensulfuron, isoxaflutole, prosulfuron, isoxachlortole, bentazone, iodosulfuron, prohexadione, diflufenzopyr, flurtamone, butylate, flumioxazin, fentrazamide, benzfendizone, isopropazole, fluazolate, aclonifen, tritosulfuron, cinidon-ethyl, mesotrione + terbuthylazine, metolachlor + terbuthylazine, S-metolachlor + terbuthylazine, paraquat, ketospiradox, aminopyralid, amicarbazone and azafenidin at a rate of application of p + q kg of active ingredient per hectare.

If the action actually observed is greater than the expected value We, there is a synergistic effect.

The synergistic effect of the combinations of the active ingredient of formula I with the active ingredients glyphosate and the potassium, isopropylammonium, sodium, trimesium, ammonium and diammonium salts thereof, simazine, terbutryn, ametryn, foramsulfuron, trifloxysulfuron, metolachlor, S-metolachlor, alachlor, acetochlor, flufenacet, dimethenamid, S-dimethenamid, pethoxamid, flumetsulam, metosulam, pyridate, pyridafol, dicamba and salts thereof, procarbazone, glufosinate, fluthiacet, imazamox, imazethapyr, nicosulfuron, primisulfuron-methyl, rimsulfuron, halosulfuron, cloransulam, clomazone, diclosulam, 2,4-D, florasulam, flumiclorac, bromoxynil, sethoxydim, ioxynil, tepraloxydim, carfentrazone, clethodim, sulfentrazone, imazaquin, sulcotrione, imazapyr, mesotrione, thifensulfuron, isoxaflutole, prosulfuron, isoxachlortole, bentazone, iodosulfuron, prohexadione, diflufenzopyr, flurtamone, butylate, flumioxazin, fentrazamide, benzfendizone, isopropazole, fluazolate, aclonifen, tritosulfuron, cinidon-ethyl, mesotrione + terbuthylazine, metolachlor + terbuthylazine, S-metolachlor + terbuthylazine, paraquat, ketospiradox, aminopyralid, amicarbazone and azafenidin is demonstrated in the following Examples.

<u>Trial description, pre-emergence test:</u>

Monocotyledonous and dicotyledonous test plants are sown in standard soil in plastics pots. Immediately after sowing, the test compounds in aqueous suspension are applied by spraying (500 litres of water/ha). The rates of application depend on the optimum concentrations determined under field conditions and greenhouse conditions. The test plants are then cultivated in a greenhouse under optimum conditions. Evaluation of the tests is made after 36 days (% action, 100 % = plants have died, 0 % = no phytotoxic action). The mixtures used in this test exhibit good results.

Trial description, post-emergence test:

The test plants are raised in plastics pots under greenhouse conditions as far as the 2- to 3-leaf stage. A standard soil is used as the cultivation substrate. At the 2- to 3-leaf stage, the herbicides are applied individually and as mixtures to the test plants. The test compounds are applied in the form of an aqueous suspension in 500 litres of water/ha. The rates of application depend on the optimum concentrations determined under field conditions and greenhouse conditions. Evaluation of the tests is made after 33 days (% action, 100 % = plants have died, 0 % = no phytotoxic action). The mixtures used in this test also exhibit good results.

Surprisingly, it has been found that specific safeners are suitable for mixing with the synergistic composition according to the invention. The present invention therefore relates also to a selectively herbicidal composition for controlling grasses and weeds in crops of useful plants, especially in crops of maize, that comprises a compound of formula I, one or more compounds selected from the compounds glyphosate and the potassium, isopropylammonium, sodium, trimesium, ammonium and diammonium salts thereof, simazine, terbutryn, ametryn, foramsulfuron, trifloxysulfuron, metolachlor, S-metolachlor, alachlor, acetochlor, flufenacet, dimethenamid, S-dimethenamid, pethoxamid, flumetsulam, metosulam, pyridate, pyridafol, dicamba and salts thereof, procarbazone, glufosinate, fluthiacet, imazamox, imazethapyr, nicosulfuron, primisulfuron-methyl, rimsulfuron, halosulfuron, cloransulam, clomazone, diclosulam, 2,4-D, florasulam, flumiclorac, bromoxynil, sethoxydim, ioxynil, tepraloxydim, carfentrazone, clethodim, sulfentrazone, imazaquin, sulcotrione, imazapyr, mesotrione, thifensulfuron, isoxaflutole, prosulfuron, isoxachlortole, bentazone, iodosulfuron, prohexadione, diflufenzopyr, flurtamone, butylate, flumioxazin, fentrazamide, benzfendizone, isopropazole, fluazolate, aclonifen, tritosulfuron, cinidon-ethyl, mesotrione + terbuthylazine, metolachlor + terbuthylazine, S-metolachlor + terbuthylazine, paraquat, ketospiradox, aminopyralid, amicarbazone and azafenidin, and a safener (counter-agent, antidote) and that protects the useful plants, but not the weeds, against the phytotoxic action of the herbicide, and to the use of such a composition for weed control in crops of useful plants.

According to the invention, therefore, a selectively herbicidal composition is further proposed that, in addition to comprising customary inert formulation adjuvants, such as carriers, solvents and wetting agents, comprises as active ingredient a mixture of

a) an amount, effective for herbicide synergy, of the compound of formula I and one or more compounds selected from the compounds glyphosate and the potassium, isopropylammonium, sodium, trimesium, ammonium and diammonium salts thereof, simazine, terbutryn, ametryn, foramsulfuron, trifloxysulfuron, metolachlor, S-metolachlor, alachlor, acetochlor, flufenacet, dimethenamid, S-dimethenamid, pethoxamid, flumetsulam, metosulam, pyridate, pyridafol, dicamba and salts thereof, procarbazone, glufosinate, fluthiacet, imazamox, imazethapyr, nicosulfuron, primisulfuron-methyl, rimsulfuron, halosulfuron, cloransulam, clomazone, diclosulam, 2,4-D, florasulam, flumiclorac, bromoxynil, sethoxydim, ioxynil, tepraloxydim, carfentrazone, clethodim, sulfentrazone, imazaquin, sulcotrione, imazapyr, mesotrione, thifensulfuron, isoxaflutole, prosulfuron, isoxachlortole, bentazone, iodosulfuron, prohexadione, diflufenzopyr, flurtamone, butylate, flumioxazin, fentrazamide, benzfendizone, isopropazole, fluazolate, aclonifen, tritosulfuron, cinidon-ethyl, mesotrione + terbuthylazine, metolachlor + terbuthylazine, S-metolachlor + terbuthylazine, paraquat, ketospiradox, aminopyralid, amicarbazone and azafenidin and

b) an amount, effective for herbicide antagonism, of a compound selected from the compound of formula 3.1

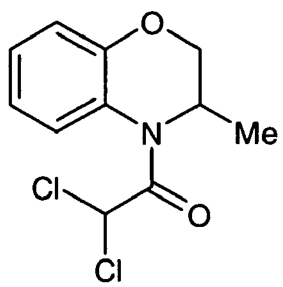

(3.1),

and the compound of formula 3.2

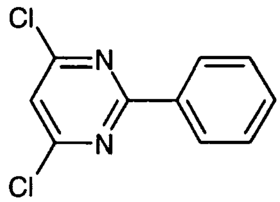

(3.2),

and the compound of formula 3.3

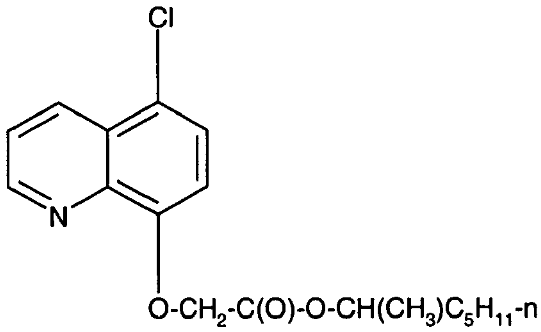

(3.3),

the free acid thereof or salts or hydrates thereof,
and the compound of formula 3.4

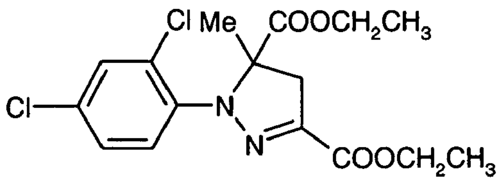

(3.4),

and the compound of formula 3.5

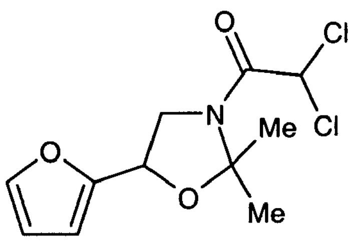

(3.5),

and the compound of formula 3.6

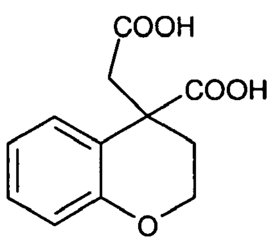

(3.6),

and the compound of formula 3.7

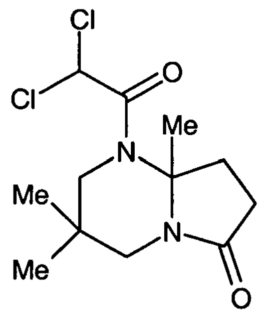

(3.7),

and the compound of formula 3.8

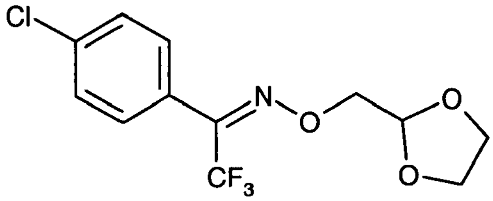

(3.8),

and of formula 3.9

$Cl_2CHCON(CH_2CH=CH_2)_2$ (3.9),

and of formula 3.10

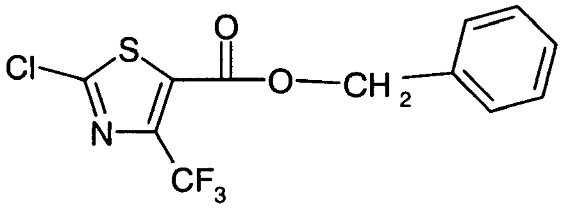

(3.10),

and of formula 3.11

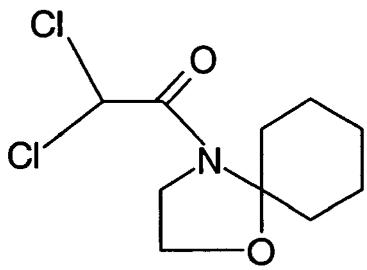

(3.11),

and of formula 3.12

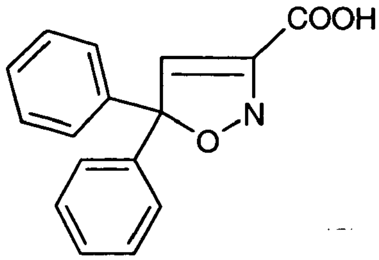

(3.12)

and the methyl and ethyl esters and salts thereof, and of formula 3.13

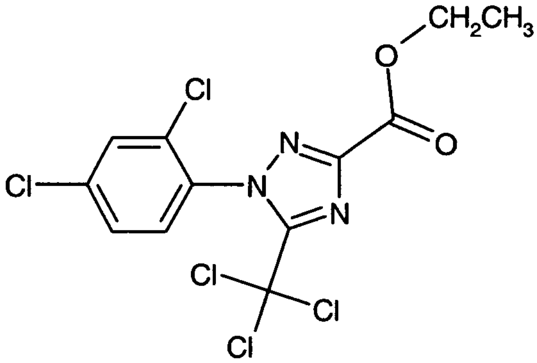

(3.13),

and of formula 3.14

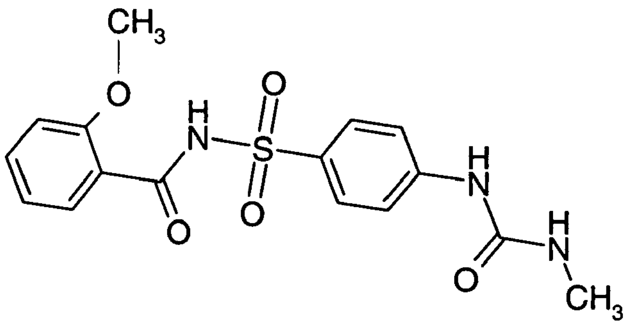

(3.14),

and of formula 3.15

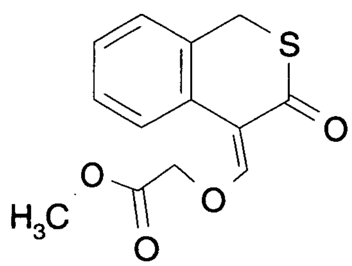

(3.15),

and of formula 3.16

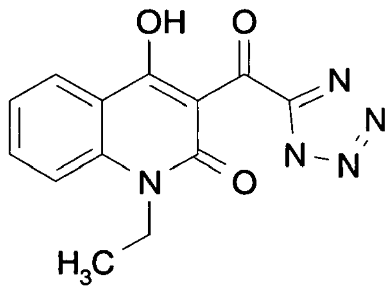 (3.16)

and of formula 3.17

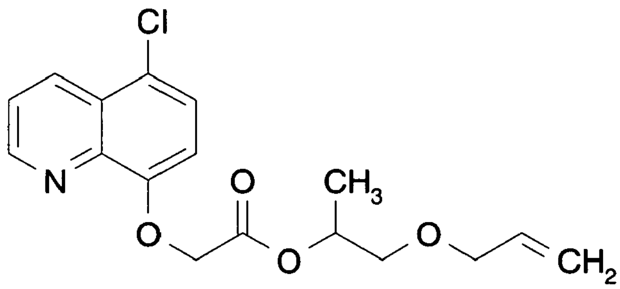 (3.17).

The invention further relates to a selectively herbicidal composition that, in addition to comprising customary inert formulation adjuvants, such as carriers, solvents and wetting agents, comprises as active ingredient a mixture of

a) a herbicidally effective amount of the compound of formula I and
b) an amount, effective for herbicide antagonism, of a compound selected from the compound of formula 3.1

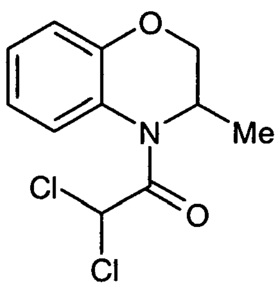 (3.1),

and the compound of formula 3.2

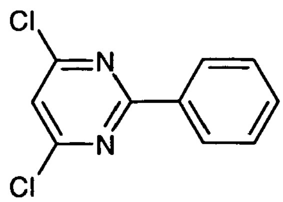 (3.2),

and the compound of formula 3.3

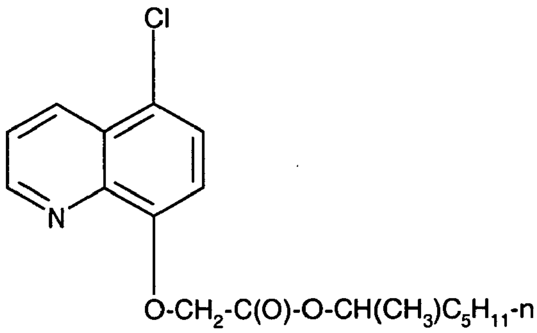

(3.3),

the free acid thereof or salts or hydrates thereof, and the compound of formula 3.4

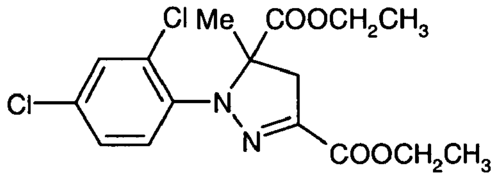

(3.4),

and the compound of formula 3.5

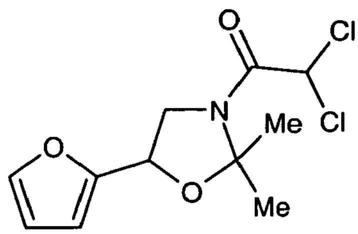

(3.5),

and the compound of formula 3.6

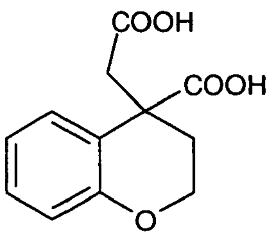

(3.6),

and the compound of formula 3.7

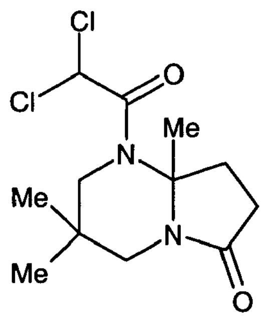

(3.7),

and the compound of formula 3.8

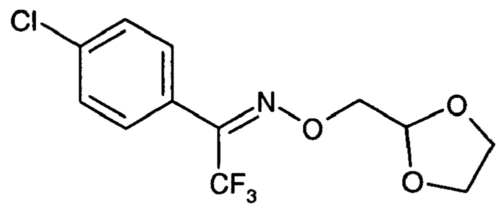

(3.8),

and of formula 3.9

$Cl_2CHCON(CH_2CH=CH_2)_2$ (3.9),

and of formula 3.10

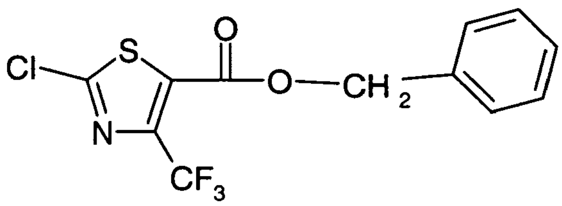

(3.10),

and of formula 3.11

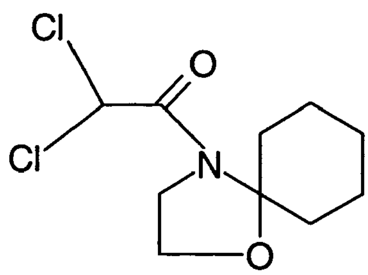

(3.11),

and of formula 3.12

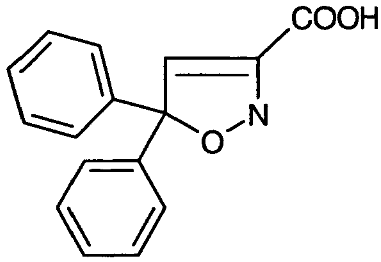

(3.12)

and the methyl and ethyl esters and salts thereof,
and of formula 3.13

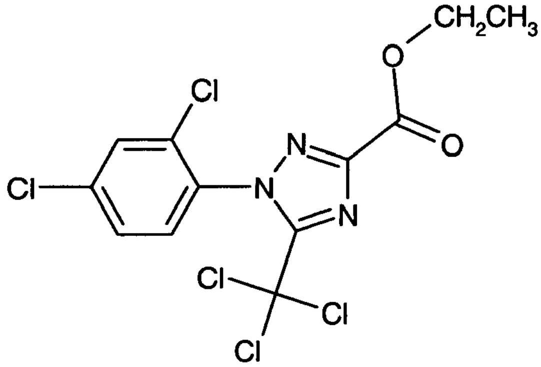

(3.13),

and of formula 3.14

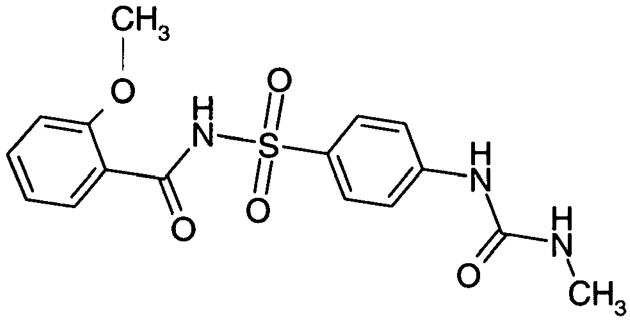

(3.14),

and of formula 3.15

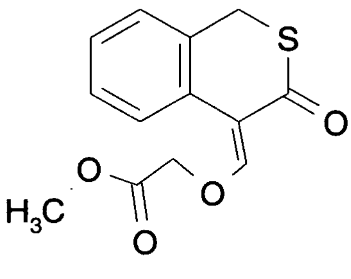

(3.15),

and of formula 3.16

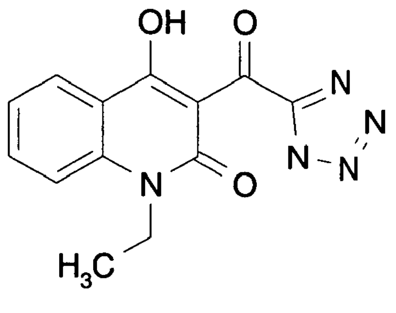

(3.16)

and of formula 3.17

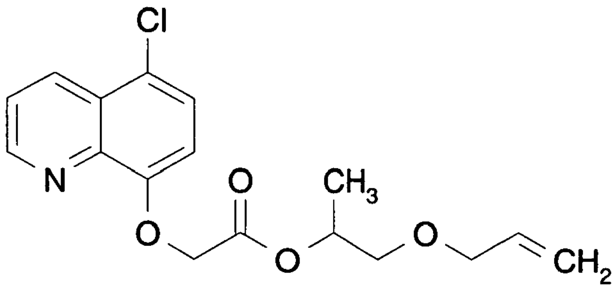

(3.17).

The invention further relates to a method for the selective control of weeds in crops of useful plants, which comprises treating the useful plants, seed or cuttings thereof or the cultivation area thereof with a herbicidally effective amount of the herbicide of formula I, where appropriate one or more herbicides selected from the compounds glyphosate and the potassium, isopropylammonium, sodium, trimesium, ammonium and diammonium salts thereof, simazine, terbutryn, ametryn, foramsulfuron, trifloxysulfuron, metolachlor, S-metolachlor, alachlor, acetochlor, flufenacet, dimethenamid, S-dimethenamid, pethoxamid, flumetsulam, metosulam, pyridate, pyridafol, dicamba and salts thereof, procarbazone, glufosinate, fluthiacet, imazamox, imazethapyr, nicosulfuron, primisulfuron-methyl, rimsulfuron, halosulfuron, cloransulam, clomazone, diclosulam, 2,4-D, florasulam, flumiclorac, bromoxynil, sethoxydim, ioxynil, tepraloxydim, carfentrazone, clethodim, sulfentrazone, imazaquin, sulcotrione, imazapyr, mesotrione, thifensulfuron, isoxaflutole, prosulfuron, isoxachlortole, bentazone, iodosulfuron, prohexadione, diflufenzopyr, flurtamone, butylate, flumioxazin, fentrazamide, benzfendizone, isopropazole, fluazolate, aclonifen, tritosulfuron, cinidon-ethyl, mesotrione + terbuthylazine, metolachlor + terbuthylazine, S-metolachlor + terbuthylazine, paraquat, ketospiradox, aminopyralid, amicarbazone and azafenidin, and an amount, effective for herbicide antagonism, of a safener selected from the compounds of formulae 3.1 to 3.17.

The compounds of formulae 3.1 to 3.17 are known and are described, for example, in The Pesticide Manual, 11$^{th}$ ed., British Crop Protection Council, 1997 under Entry Nos. 61 (formula 3.1, benoxacor), 304 (formula 3.2, fenclorim), 154 (formula 3.3, cloquintocet), 462 (formula 3.4, mefenpyr-diethyl), 377 (formula 3.5, furilazole), 363 (formula 3.8, fluxofenim), 213 (formula 3.9, dichlormid) and 350 (formula 3.10, flurazole). The compound of formula 3.11 is known by the name MON 4660 (Monsanto) and is described e.g. in EP-A-0 436 483.

The compound of formula 3.6 (AC 304415) is described, for example, in EP-A-0 613 618, and the compound of formula 3.7 in DE-A-2948535. The compound of formula 3.12 (isoxadifen, 4,5-dihydro-5,5-diphenyl-1,2-oxazole-3-carboxylic acid) is described under Chemical Abstracts No. 209866-92-2 and in DE-A-4331448, and the compound of formula 3.13 is described in DE-A-3525205. The compound of formula 3.14 is known, for example, from US-A-5 215 570, and the compound of formula 3.15 from EP-A-0 929 543. The compound of formula 3.16 is described in WO 99/00020. In addition to the compound of formula 3.16, the other 3-(5-tetrazolylcarbonyl)-2-quinolones described in WO 99/00020, especially the compounds specifically disclosed in Tables 1 and 2 on pages 21 to 29, are suitable for protecting crop plants from the phytotoxic effect of the compound of formula I. The compound of formula 3.17 is described, for example, in US-A-6 162 762 .

Crop plants that can be protected by the safeners of formulae 3.1 to 3.17 against the damaging effect of the above-mentioned herbicides include especially cereals, cotton, soybeans, sugar beet, sugar cane, plantation crops, rape, maize and rice, most especially cereals. Crops are to be understood as also including those which have been rendered tolerant towards herbicides or classes of herbicides by conventional methods of breeding or genetic engineering. Examples of such crops are glyphosate- and glufosinate-resistant maize varieties commercially available under the trade names RoundupReady® and LibertyLink®.

Crops are to be understood as also including those which have been rendered resistant to harmful insects by genetic engineering methods, for example Bt maize (resistant to European corn borer), Bt cotton (resistant to cotton boll weevil) and also Bt potatoes (resistant to Colorado beetle). Examples of Bt maize are the Bt 176 maize hybrids of NK® (Syngenta Seeds). The Bt toxin is a protein that is formed naturally by *Bacillus thuringiensis* soil bacteria. Examples of toxins, or transgenic plants able to synthesise such toxins, are described in EP-A-0 451 878, EP-A-0 374 753, WO 93/07278, WO 95/34656 and EP-A-0 427 529.

The weeds to be controlled may be both monocotyledonous and dicotyledonous weeds, e.g. Stellaria, Agrostis, Digitaria, Avena, Setaria, Apera, Brachiara, Phalaris, Setaria, Sinapis, Lolium, Solanum, Echinochloa, Scirpus, Monochoria, Sagittaria, Panicum, Bromus, Alopecurus, Sorghum halepense, Sorghum bicolor, Rottboellia, Cyperus, Abutilon, Sida, Xanthium, Amaranthus, Chenopodium, Ipomoea, Chrysanthemum, Galium, Viola and Veronica.

Areas under cultivation are to be understood as including land where the crop plants are already growing or where seed material of those crop plants has already been sown as well as land intended for the cultivation of those crop plants.

Depending on the intended use, a safener of formula 3.1 to 3.17 can be used for pretreating the seed material of the crop plant (dressing the seed or cuttings) or introduced into the soil before or after sowing. It can, however, also be applied alone or together with the herbicide after emergence of the plants. The treatment of the plants or the seed material with the safener can therefore take place in principle independently of the time of application of the herbicide. The treatment of the plant may, however, be carried out also by simultaneous application of herbicide and safener (e.g. in the form of a tank mixture). The rate of application of safener relative to herbicide is largely dependent on the mode of application. In the case of a field treatment, which is carried out either using a tank mixture comprising a combination of safener and herbicide or by separate application of safener and herbicide, the ratio of herbicides to safener is generally from 100:1 to 1:10, preferably from 20:1 to 1:1. As a rule, from 0.001 to 1.0 kg of safener/ha, preferably from 0.001 to 0.25 kg of safener/ha, is applied in the case of field treatment.

The rates of application of herbicides are generally from 0.001 to 5 kg/ha, but preferably from 0.005 to 0.05 kg/ha.

The compositions according to the invention are suitable for all methods of application customary in agriculture, such as, for example, pre-emergence application, post-emergence application and seed dressing.

In the case of seed dressing, generally from 0.001 to 10 g of safener/kg of seed, preferably from 0.05 to 2 g of safener/kg of seed, are applied. If the safener is applied in liquid form, by seed soaking, shortly before sowing, it is advantageous to use safener solutions containing the active ingredient in a concentration of from 1 to 10 000 ppm, especially from 100 to 1000 ppm.

For application, the safeners of formulae 3.1 to 3.17 or combinations of those safeners with the herbicide of formula I and, where appropriate, one or more herbicides selected from the compounds glyphosate and the potassium, isopropylammonium, sodium, trimesium, ammonium and diammonium salts thereof, simazine, terbutryn, ametryn, foramsulfuron, trifloxysulfuron, metolachlor, S-metolachlor, alachlor, acetochlor, flufenacet, dimethenamid, S-dimethenamid, pethoxamid, flumetsulam, metosulam, pyridate, pyridafol, dicamba and salts thereof, procarbazone, glufosinate, fluthiacet, imazamox, imazethapyr, nicosulfuron, primisulfuron-methyl, rimsulfuron, halosulfuron, cloransulam, clomazone, diclosulam, 2,4-D, florasulam, flumiclorac, bromoxynil, sethoxydim, ioxynil, tepraloxydim, carfentrazone, clethodim, sulfentrazone, imazaquin, sulcotrione, imazapyr, mesotrione, thifensulfuron, isoxaflutole, prosulfuron, isoxachlortole, bentazone, iodosulfuron, prohexadione, diflufenzopyr, flurtamone, butylate, flumioxazin, fentrazamide, benzfendizone, isopropazole, fluazolate, aclonifen, tritosulfuron, cinidon-ethyl, mesotrione + terbuthylazine, metolachlor + terbuthylazine, S-metolachlor + terbuthylazine, paraquat, ketospiradox, aminopyralid, amicarbazone and azafenidin are advantageously processed together with the adjuvants customary in formulation technology into formulations, for example into emulsifible concentrates, coatable pastes, directly sprayable or dilutable solutions, dilute emulsions, wettable powders, soluble powders, dusts, granules or microcapsules.

Such formulations are described, for example, on pages 9 to 13 of WO 97/34485. The formulations are prepared in known manner, for example by intimately mixing and/or grinding the active ingredients with liquid or solid formulation adjuvants such as, for example, solvents or solid carriers. It is also possible additionally to use surface-active compounds (surfactants) in the preparation of the formulations. Solvents and solid carriers suitable for that purpose include, for example, those mentioned on page 6 of WO 97/34485.

Depending on the nature of the active ingredient to be formulated, suitable surface-active compounds are non-ionic, cationic and/or anionic surfactants and surfactant mixtures having good emulsifying, dispersing and wetting properties. Examples of suitable anionic, non-ionic and cationic surfactants are listed, for example, on pages 7 and 8 of WO

97/34485. In addition, the surfactants conventionally employed in formulation technology, which are described, *inter alia,* in "McCutcheon's Detergents and Emulsifiers Annual" MC Publishing Corp., Ridgewood New Jersey, 1981, Stache, H., "Tensid-Taschenbuch", Carl Hanser Verlag, Munich/Vienna 1981, and M. and J. Ash, "Encyclopedia of Surfactants", Vol. I-III, Chemical Publishing Co., New York, 1980-81, are also suitable for the preparation of the herbicidal compositions according to the invention.

The herbicidal formulations generally contain from 0.1 to 99 % by weight, especially from 0.1 to 95 % by weight, of an active ingredient mixture of the compound of formula I, a compound selected from the compounds glyphosate and the potassium, isopropylammonium, sodium, trimesium, ammonium and diammonium salts thereof, simazine, terbutryn, ametryn, foramsulfuron, trifloxysulfuron, metolachlor, S-metolachlor, alachlor, acetochlor, flufenacet, dimethenamid, S-dimethenamid, pethoxamid, flumetsulam, metosulam, pyridate, pyridafol, dicamba and salts thereof, procarbazone, glufosinate, fluthiacet, imazamox, imazethapyr, nicosulfuron, primisulfuron-methyl, rimsulfuron, halosulfuron, cloransulam, clomazone, diclosulam, 2,4-D, florasulam, flumiclorac, bromoxynil, sethoxydim, ioxynil, tepraloxydim, carfentrazone, clethodim, sulfentrazone, imazaquin, sulcotrione, imazapyr, mesotrione, thifensulfuron, isoxaflutole, prosulfuron, isoxachlortole, bentazone, iodosulfuron, prohexadione, diflufenzopyr, flurtamone, butylate, flumioxazin, fentrazamide, benzfendizone, isopropazole, fluazolate, aclonifen, tritosulfuron, cinidon-ethyl, mesotrione + terbuthylazine, metolachlor + terbuthylazine, S-metolachlor + terbuthylazine, paraquat, ketospiradox, aminopyralid, amicarbazone and azafenidin, and the compounds of formulae 3.1 to 3.17, up to 99.9 % by weight of a solid or liquid formulation adjuvant, and from 0 to 25 % by weight, especially from 0.1 to 25 % by weight, of a surfactant. Whereas commercial products will preferably be formulated as concentrates, the end user will normally employ dilute formulations.

The compositions may also comprise further ingredients, such as stabilisers, for example vegetable oils or epoxidised vegetable oils (epoxidised coconut oil, rapeseed oil or soybean oil), anti-foams, for example silicone oil, preservatives, viscosity regulators, binders, tackifiers, and also fertilisers or other active ingredients. Various methods and techniques come into consideration for the use of safeners of formulae 3.1 to 3.17, or of compositions comprising them, for protecting cultivated plants against the damaging effects of herbicides selected from the compounds of formula I, glyphosate and the potassium, isopropylammonium, sodium, trimesium, ammonium and diammonium salts thereof, simazine, terbutryn, ametryn, foramsulfuron, trifloxysulfuron, metolachlor, S-metolachlor, alachlor, acetochlor, flufenacet, dimethenamid, S-dimethenamid, pethoxamid, flumetsulam, metosulam, pyridate, pyridafol, dicamba and salts thereof, procarbazone, glufosinate, fluthiacet, imazamox, imazethapyr, nicosulfuron, primisulfuron-methyl, rimsulfuron, halosulfuron, cloransulam, clomazone, diclosulam, 2,4-D, florasulam, flumiclorac, bromoxynil, sethoxydim, ioxynil, tepraloxydim, carfentrazone, clethodim, sulfentrazone, imazaquin, sulcotrione, imazapyr, mesotrione, thifensulfuron, isoxaflutole, prosulfuron, isoxachlortole, bentazone, iodosulfuron, prohexadione, diflufenzopyr, flurtamone, butylate, flumioxazin, fentrazamide, benzfendizone, isopropazole, fluazolate, aclonifen, tritosulfuron, cinidon-ethyl, mesotrione + terbuthylazine, metolachlor + terbuthylazine, S-metolachlor + terbuthylazine, paraquat, ketospiradox, aminopyralid, amicarbazone and azafenidin, for example the following methods and techniques:

i) <u>Seed dressing</u>

a) Dressing the seeds with a wettable powder formulation of a compound of formula 3.1 to 3.17 by shaking in a vessel until the formulation is evenly distributed over the surface of the seeds (dry dressing). Approximately from 1 to 500 g of compound of formula 3.1 to 3.17 (from 4 g to 2 kg of wettable powder) are used per 100 kg of seed material.
b) Dressing the seeds with an emulsifiable concentrate of the compound of formula 3.1 to 3.17 in accordance with method a) (wet dressing).
c) Dressing by immersing the seed material in a liquor containing from 100 to 1000 ppm of the compound of formula 3.1 to 3.17 for from 1 to 72 hours and optionally subsequently drying the seed (immersion dressing).

Dressing of the seed material or treatment of the germinated seedling are, of course, the preferred methods of application since treatment with the active ingredient is entirely directed towards the target crop. As a rule, from 1 to 1000 g of antidote, preferable from 5 to 250 g of antidote, are used per 100 kg of seed material, concentrations above or below the stated concentration limits being possible depending on the method, which also allows the addition of other active ingredients or micronutrients (repeat dressing).

ii) <u>Application in the form of a tank mixture</u>

A liquid formulation of a mixture of antidote and herbicide (in a quantity ratio to each other of from 10:1 to 1:100) is used, the rate of application of herbicide being from 0.005 to 5.0 kg per hectare. Such tank mixtures are applied before or after sowing.

iii) Application to the seed furrow

The compounds of formula 3.1 or 3.2 are introduced into the open, sown seed furrow in the form of an emulsifiable concentrate, wettable powder or granules. When the seed furrow has been covered over, the herbicide is applied by the pre-emergence method in customary manner.

iv) Controlled release of active ingredient

A solution of the compounds of formulae 3.1 to 3.17 is applied to granular mineral carriers or polymerised granules (urea/formaidehyde) and dried. If desired, a coating can be applied (coated granules), which allows the active ingredient to be released in metered amounts over a specific period of time.

Preferred formulations have especially the following compositions (% = percent by weight):

| Emulsifiable concentrates: | |
|---|---|
| active ingredient mixture: | 1 to 90 %, preferably 5 to 20 % |
| surfactant: | 1 to 30 %, preferably 10 to 20 % |
| liquid carrier: | 5 to 94 %, preferably 70 to 85 % |

| Dusts: | |
|---|---|
| active ingredient mixture: | 0.1 to 10 %, preferably 0.1 to 5 % |
| solid carrier: | 99.9 to 90 %, preferably 99.9 to 99 % |

| Suspension concentrates: | |
|---|---|
| active ingredient mixture: | 5 to 75 %, preferably 10 to 50 % |
| water: | 94 to 24 %, preferably 88 to 30 % |
| surfactant: | 1 to 40 %, preferably 2 to 30 % |

| Wettable powders: | |
|---|---|
| active ingredient mixture: | 0.5 to 90 %, preferably 1 to 80 % |
| surfactant: | 0.5 to 20 %, preferably 1 to 15 % |
| solid carrier: | 5 to 95 %, preferably 15 to 90 % |

| Granules: | |
|---|---|
| active ingredient mixture: | 0.1 to 30 %, preferably 0.1 to 15 % |
| solid carrier: | 99.5 to 70 %, preferably 97 to 85 % |

The following Examples further illustrate, but do not limit, the invention.

Formulation Examples for mixtures of herbicides of formula I, where appropriate compounds selected from glyphosate and the potassium, isopropylammonium, sodium, trimesium, ammonium and diammonium salts thereof, simazine, terbutryn, ametryn, foramsulfuron, trifloxysulfuron, metolachlor, S-metolachlor, alachlor, acetochlor, flufenacet, dimethenamid, S-dimethenamid, pethoxamid, flumetsulam, metosulam, pyridate, pyridafol, dicamba and salts thereof, procarbazone, glufosinate, fluthiacet, imazamox, imazethapyr, nicosulfuron, primisulfuron-methyl, rimsulfuron, halosulfuron, cloransulam, clomazone, diclosulam, 2,4-D, florasulam, flumiclorac, bromoxynil, sethoxydim, ioxynil, tepraloxydim, carfentrazone. clethodim, sulfentrazone, imazaguin, sulcotrione, imazapyr, mesotrione, thifensulfuron, isoxaflutole, prosulfuron, isoxachlortole, bentazone, iodosulfuron, prohexadione. diflufenzopyr, flurtamone, butylate, flumioxazin, fentrazamide, benzfendizone, isopropazole, fluazolate, aclonifen, tritosulfuron, cinidon-ethyl, mesotrione + terbuthylazine, metolachlor + terbuthylazine, S-metolachlor + terbuthylazine, paraquat, ketospiradox, aminopyralid, amicarbazone and azafenidin, and safeners of formulae 3.1 to 3.17 (% = percent bv weight):

| F1. Emulsifiable concentrates | a) | b) | c) | d) |
|---|---|---|---|---|
| active ingredient mixture | 5 % | 10 % | 25 % | 50 % |
| calcium dodecylbenzenesulfonate | 6 % | 8 % | 6 % | 8 % |
| castor oil polyglycol ether (36 mol of ethylene oxide) | 4 % | - | 4 % | 4 % |
| octylphenol polyglycol ether (7-8 mol of ethylene oxide) | - | 4 % | - | 2 % |
| cyclohexanone | - | - | 10 % | 20 % |
| arom. hydrocarbon mixture $C_9$-$C_{12}$ | 85 % | 78 % | 55 % | 16 % |

Emulsions of any desired concentration can be obtained from such concentrates by dilution with water.

| F2. Solutions | a) | b) | c) | d) |
|---|---|---|---|---|
| active ingredient mixture | 5 % | 10 % | 50 % | 90 % |
| 1 -methoxy-3-(3-methoxypropoxy)-propane | - | 20 % | 20 % | - |
| polyethylene glycol mol. wt. 400 | 20 % | 10 % | - | - |
| N-methyl-2-pyrrolidone | - | - | 30 % | 10 % |
| arom. hydrocarbon mixture $C_9$-$C_{12}$ | 75 % | 60 % | - | - |

The solutions are suitable for application in the form of microdrops.

| F3. Wettable powders | a) | b) | c) | d) |
|---|---|---|---|---|
| active ingredient mixture | 5 % | 25 % | 50 % | 80 % |
| sodium lignosulfonate | 4 % | - | 3 % | - |
| sodium lauryl sulfate | 2 % | 3 % | - | 4 % |
| sodium diisobutylnaphthalenesulfonate | - | 6 % | 5 % | 6 % |
| octylphenol polyglycol ether (7-8 mol of ethylene oxide) | - | 1 % | 2 % | - |
| highly disperse silicic acid | 1 % | 3 % | 5 % | 10 % |
| kaolin | 88 % | 62 % | 35 % | - |

The active ingredient is thoroughly mixed with the adjuvants and the mixture is thoroughly ground in a suitable mill, yielding wettable powders which can be diluted with water to give suspensions of any desired concentration.

| F4. Coated granules | a) | b) | c) |
|---|---|---|---|
| active ingredient mixture | 0.1 % | 5 % | 15 % |
| highly disperse silicic acid | 0.9 % | 2 % | 2 % |
| inorg. carrier (diameter 0.1 - 1 mm) e.g. $CaCO_3$ or $SiO_2$ | 99.0 % | 93 % | 83 % |

The active ingredient is dissolved in methylene chloride, the solution is sprayed onto the carrier and the solvent is subsequently evaporated off *in vacuo.*

| F5. Coated granules | a) | b) | c) |
|---|---|---|---|
| active ingredient mixture | 0.1 % | 5 % | 15 % |
| polyethylene glycol mol. wt. 200 | 1.0 % | 2 % | 3 % |
| highly disperse silicic acid | 0.9 % | 1 % | 2 % |
| inorg. carrier (diameter 0.1 - 1 mm) e.g. $CaCO_3$ or $SiO_2$ | 98.0 % | 92 % | 80 % |

The finely ground active ingredient is applied uniformly, in a mixer, to the carrier moistened with polyethylene glycol. Non-dusty coated granules are obtained in this manner.

| F6. Extruder granules | a) | b) | c) | d) |
|---|---|---|---|---|
| active ingredient mixture | 0.1 % | 3 % | 5 % | 15 % |
| sodium lignosulfonate | 1.5 % | 2 % | 3 % | 4 % |
| carboxymethylcellulose | 1.4 % | 2 % | 2 % | 2 % |
| kaolin | 97.0 % | 93 % | 90 % | 79 % |

The active ingredient is mixed and ground with the adjuvants and the mixture is moistened with water. The resulting mixture is extruded and then dried in a stream of air.

| F7. Dusts | a) | b) | c) |
|---|---|---|---|
| active ingredient mixture | 0.1 % | 1 % | 5 % |
| talcum | 39.9 % | 49 % | 35 % |
| kaolin | 60.0 % | 50 % | 60 % |

Ready-to-use dusts are obtained by mixing the active ingredient with the carriers and grinding the mixture in a suitable mill.

| F8. Suspension concentrates | a) | b) | c) | d) |
|---|---|---|---|---|
| active ingredient mixture | 3 % | 10 % | 25 % | 50 % |
| ethylene glycol | 5 % | 5 % | 5 % | 5 % |
| nonylphenol polyglycol ether (15 mol of ethylene oxide) | - | 1 % | 2 % | - |
| sodium lignosulfonate | 3 % | 3 % | 4 % | 5 % |
| carboxymethylcellulose | 1 % | 1 % | 1 % | 1 % |
| 37% aqueous formaldehyde solution | 0.2 % | 0.2 % | 0.2 % | 0.2 % |
| silicone oil emulsion | 0.8 % | 0.8 % | 0.8 % | 0.8 % |
| water | 87 % | 79 % | 62 % | 38 % |

The finely ground active ingredient is intimately mixed with the adjuvants, yielding a suspension concentrate from which suspensions of any desired concentration can be obtained by dilution with water.

It is often more practical for the compounds of formula I, glyphosate and the potassium, isopropylammonium, sodium, trimesium, ammonium and diammonium salts thereof, simazine, terbutryn, ametryn, foramsulfuron, trifloxysulfuron, metolachlor, S-metolachlor, alachlor, acetochlor, flufenacet, dimethenamid, S-dimethenamid, pethoxamid, flumetsulam, metosulam, pyridate, pyridafol, dicamba and salts thereof, procarbazone, glufosinate, fluthiacet, imazamox, imazethapyr, nicosulfuron, primisulfuron-methyl, rimsulfuron, halosulfuron, cloransulam, clomazone, diclosulam, 2,4-D, florasulam, flumiclorac, bromoxynil, sethoxydim, ioxynil, tepraloxydim, carfentrazone, clethodim, sulfentrazone, imazaquin, sulcotrione, imazapyr, mesotrione, thifensulfuron, isoxaflutole, prosulfuron, isoxachlortole, bentazone, iodosulfuron, prohexadione, diflufenzopyr, flurtamone, butylate, flumioxazin, fentrazamide, benzfendizone, isopropazole, fluazolate, aclonifen, tritosulfuron, cinidon-ethyl, mesotrione + terbuthylazine, metolachlor + terbuthylazine, S-metolachlor + terbuthylazine, paraquat, ketospiradox, aminopyralid, amicarbazone and azafenidin, and the compounds of formulae 3.1 to 3.17 to be formulated separately and then to be combined in the applicator in the desired mixing ratio in the form of a "tank mixture" in water shortly before application.

The ability of the safeners of formulae 3.1 to 3.17 to protect cultivated plants from the phytotoxic effect of herbicides of formula I, glyphosate and the potassium, isopropylammonium, sodium, trimesium, ammonium and diammonium salts thereof, simazine, terbutryn, ametryn, foramsulfuron, trifloxysulfuron, metolachlor, S-metolachlor, alachlor, acetochlor, flufenacet, dimethenamid, S-dimethenamid, pethoxamid, flumetsulam, metosulam, pyridate, pyridafol, dicamba and salts thereof, procarbazone, glufosinate, fluthiacet, imazamox, imazethapyr, nicosulfuron, primisulfuron-methyl, rimsulfuron, halosulfuron, cloransulam, clomazone, diclosulam, 2,4-D, florasulam, flumiclorac, bromoxynil, sethoxydim, ioxynil, tepraloxydim, carfentrazone, clethodim, sulfentrazone, imazaquin, sulcotrione, imazapyr, mesotrione, thifensulfuron, isoxaflutole, prosulfuron, isoxachlortole, bentazone, iodosulfuron, prohexadione, diflufenzopyr, flurtamone, butylate, flumioxazin, fentrazamide, benzfendizone, isopropazole, fluazolate, aclonifen, tritosulfuron, cinidon-ethyl, mesotrione + terbuthylazine, metolachlor + terbuthylazine, S-metolachlor + terbuthylazine, paraquat, ketospiradox, aminopyralid, amicarbazone and azafenidin is illustrated in the following Examples.

Biological Example: safening action

The test plants are raised in plastics pots under greenhouse conditions up to the 4-leaf stage. At that stage, on the one hand the herbicides alone and, on the other hand, also mixtures of the herbicides with the test compounds to be tested as safeners are applied to the test plants. Application is made in the form of an aqueous suspension of the test compounds prepared from a 25 % wettable powder (Example F3, b)) or from a suspension concentrate as in Example F8, using 500 litres of water/ha. 3 weeks after application, the phytotoxic effect of the herbicides on the cultivated plants, such as, for example, maize and cereals, is evaluated using a percentage scale. 100 % indicates that the test plant has died, 0 % indicates no phytotoxic effect. The mixtures according to the invention exhibit good action in this test.

## Claims

1. A selectively herbicidal composition that comprises as active ingredient a mixture of

   a) a herbicidally effective amount of the compound of formula I

   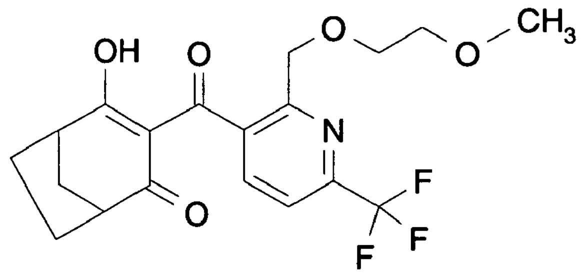

   (I)

   or an agronomically acceptable salt of that compound, and
   b) a synergistically effective amount of one or more compounds selected from glyphosate and the potassium, isopropylammonium, sodium, trimesium, ammonium and diammonium salts thereof, simazine, terbutryn, ametryn, foramsulfuron, trifloxysulfuron, metolachlor, S-metolachlor, alachlor, acetochlor, flufenacet, dimethenamid, S-dimethenamid, pethoxamid, flumetsulam, metosulam, pyridate, pyridafol, dicamba and salts thereof, procarbazone, glufosinate, fluthiacet, imazamox, imazethapyr, nicosulfuron, primisulfuron-methyl, rimsulfuron, halosulfuron, cloransulam, clomazone, diclosulam, 2,4-D, florasulam, flumiclorac, bromoxynil, sethoxydim, ioxynil, tepraloxydim, carfentrazone, clethodim, sulfentrazone, imazaquin, sulcotrione, imazapyr, mesotrione, thifensulfuron, isoxaflutole, prosulfuron, isoxachlortole, bentazone, iodosulfuron, prohexadione, diflufenzopyr, flurtamone, butylate, flumioxazin, fentrazamide, benzfendizone, isopropazole, fluazolate, aclonifen, tritosulfuron, cinidon-ethyl, mesotrione + terbuthylazine, metolachlor + terbuthylazine, S-metolachlor + terbuthylazine, paraquat, ketospiradox, aminopyralid, amicarbazone and azafenidin.

2. A method of controlling undesired plant growth in crops of useful plants, which comprises allowing a herbicidally effective amount of a composition according to claim 1 to act on the cultivated plant or the locus thereof.

3. A method according to claim 2, wherein the cultivated plant is maize or a cereal.

4. A method according to claim 2, wherein the crops of useful plants are treated with said composition at rates of application corresponding to a total amount of active ingredient of from 1 to 5000 g per hectare.

5. A selectively herbicidal composition, which comprises as active ingredient a mixture of

   a) an amount, effective for herbicide synergy, of the compound of formula I according to claim 1 and one or more compounds selected from glyphosate and the potassium, isopropylammonium, sodium, trimesium, ammonium and diammonium salts thereof, simazine, terbutryn, ametryn, foramsulfuron, trifloxysulfuron, metolachlor, S-metolachlor, alachlor, acetochlor, flufenacet, dimethenamid, S-dimethenamid, pethoxamid, flumetsulam, metosulam, pyridate, pyridafol, dicamba and salts thereof, procarbazone, glufosinate, fluthiacet, imazamox, imazethapyr, nicosulfuron, primisulfuron-methyl, rimsulfuron, halosulfuron, cloransulam, clomazone, diclosulam, 2,4-D, florasulam, flumiclorac, bromoxynil, sethoxydim, ioxynil, tepraloxydim, carfentrazone, clethodim,

sulfentrazone, imazaquin, sulcotrione, imazapyr, mesotrione, thifensulfuron, isoxaflutole, prosulfuron, isoxachlortole, bentazone, iodosulfuron, prohexadione, diflufenzopyr, flurtamone, butylate, flumioxazin, fentrazamide, benzfendizone, isopropazole, fluazolate, aclonifen, tritosulfuron, cinidon-ethyl, mesotrione + terbuthylazine, metolachlor + terbuthylazine, S-metolachlor + terbuthylazine, paraquat, ketospiradox, aminopyralid, amicarbazone and azafenidin and

b) an amount, effective for herbicide antagonism, of a compound selected from the compound of formula 3.1

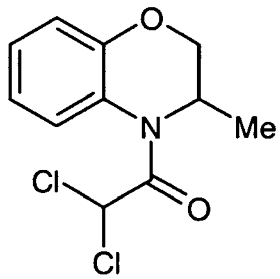

(3.1),

and the compound of formula 3.2

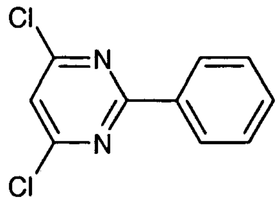

(3.2),

and the compound of formula 3.3

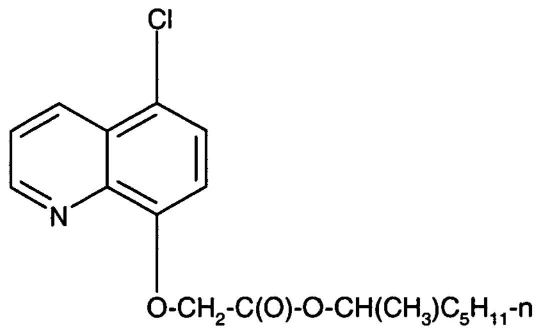

(3.3),

the free acid
thereof or salts or hydrates thereof,
and the compound of formula 3.4

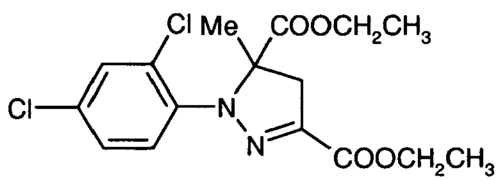

(3.4),

and the compound of formula 3.5

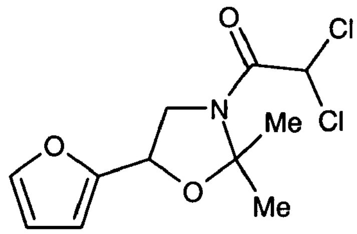

(3.5),

and the compound of formula 3.6

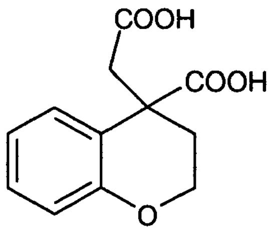

(3.6),

and the compound of formula 3.7

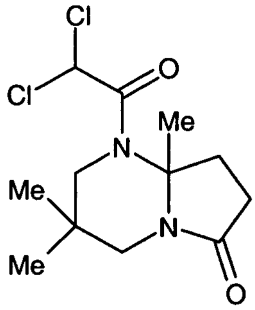

(3.7),

and the compound of formula 3.8

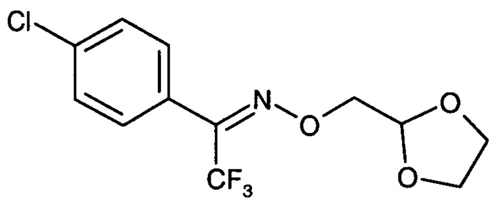

(3.8),

and of formula 3.9

$$Cl_2CHCON(CH_2CH{=}CH_2)_2 \qquad (3.9),$$

and of formula 3.10

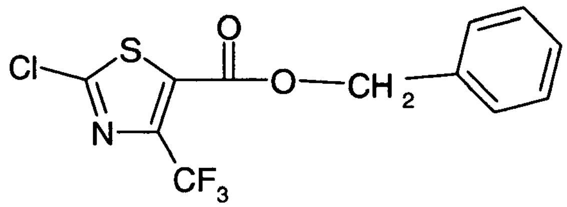

(3.10),

and of formula 3.11

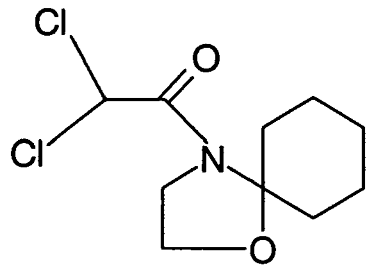

(3.11),

and of formula 3.12

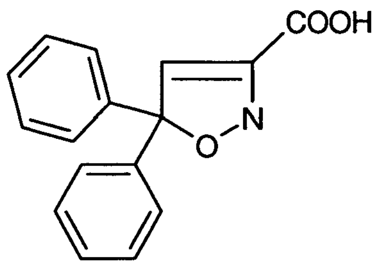

(3.12)

and the methyl and ethyl esters and salts thereof, and of formula 3.13

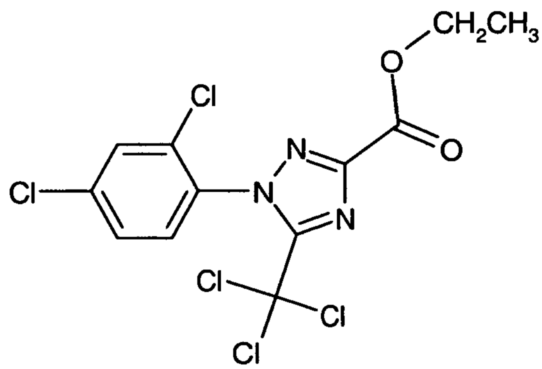

(3.13),

and of formula 3.14

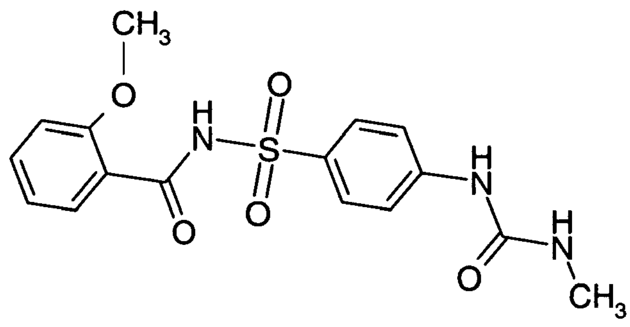

(3.14),

and of formula 3.15

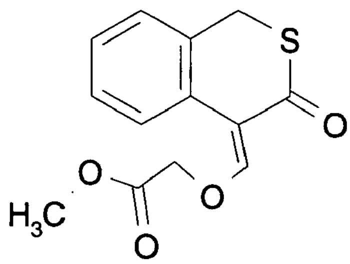

(3.15),

and of formula 3.16

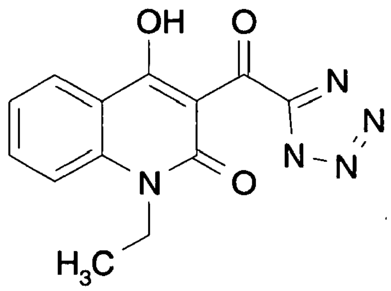

(3.16)

and of formula 3.17

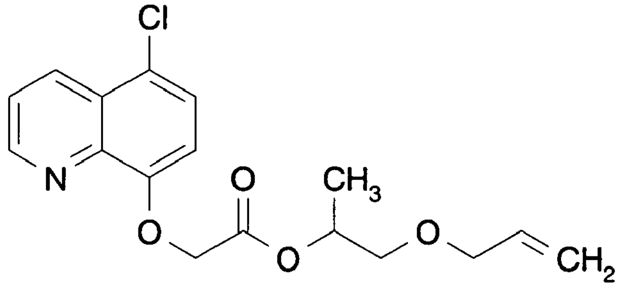

(3.17).

**6.** A method for the selective control of weeds and grasses in crops of useful plants, which comprises treating the useful plants, seed or cuttings thereof or the cultivation area thereof with an amount, effective for herbicide synergy,

of a composition according to claim 5.

7. A method according to claim 6, wherein the rate of application of herbicides is from 1 to 5000 g/ha and the rate of application of safener is from 0.001 to 0.5 kg/ha.

8. A method according to claim 6, wherein the crops of useful plants are maize or cereals.

9. A selectively herbicidal composition that comprises as active ingredient a mixture of

a) a herbicidally effective amount of the compound of formula I according to claim 1 and
b) an amount, effective for herbicide antagonism, of a compound selected from the compound of formula 3.1

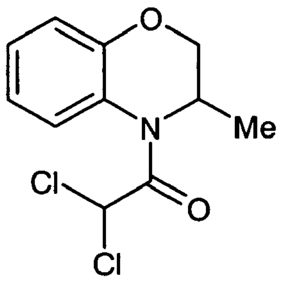

(3.1),

and the compound of formula 3.2

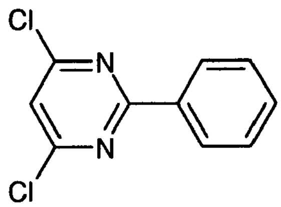

(3.2),

and the compound of formula 3.3

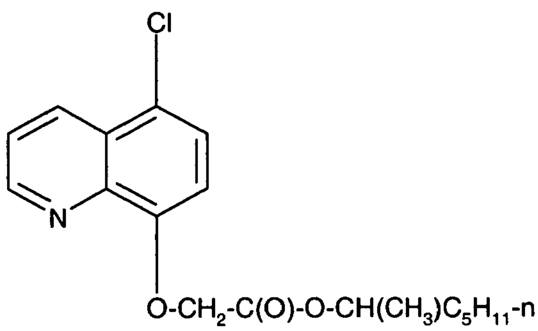

(3.3),

the free acid
thereof or salts or hydrates thereof,
and the compound of formula 3.4

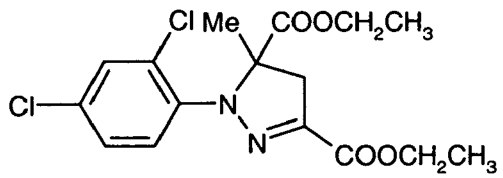

(3.4),

and the compound of formula 3.5

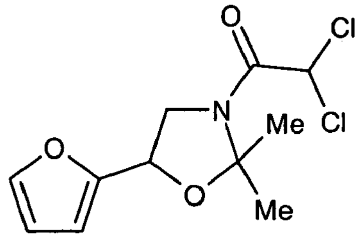

(3.5),

and the compound of formula 3.6

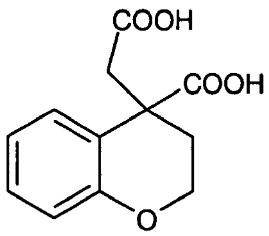

(3.6),

and the compound of formula 3.7

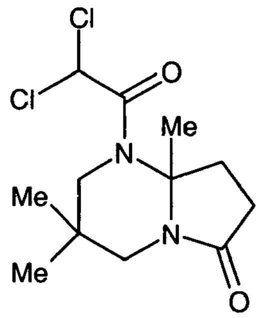

(3.7),

and the compound of formula 3.8

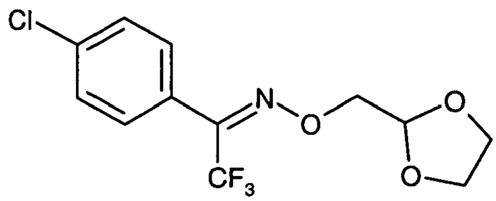

(3.8),

and of formula 3.9

$Cl_2CHCON(CH_2CH=CH_2)_2$ (3.9),

and of formula 3.10

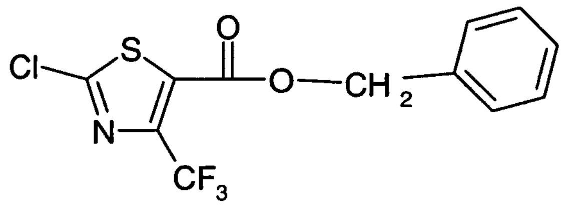

(3.10),

and of formula 3.11

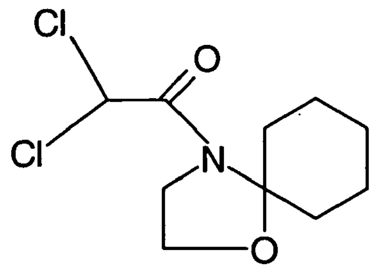

(3.11),

and of formula 3.12

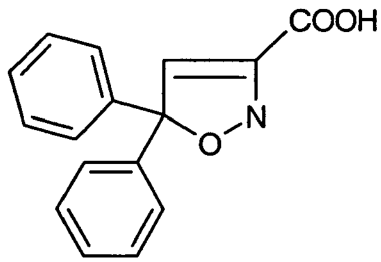

(3.12)

and the methyl and ethyl esters and salts thereof,
and of formula 3.13

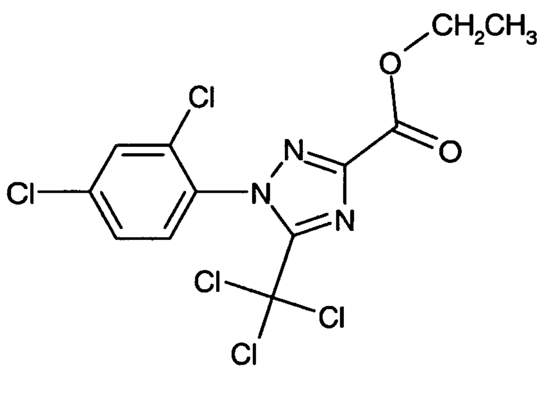

(3.13),

and of formula 3.14

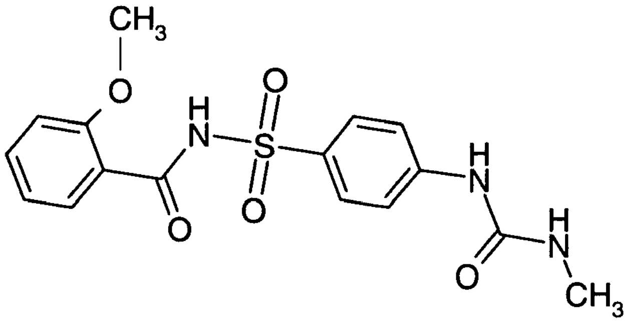

(3.14),

and of formula 3.15

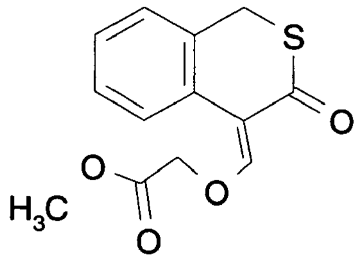

(3.15),

and of formula 3.16

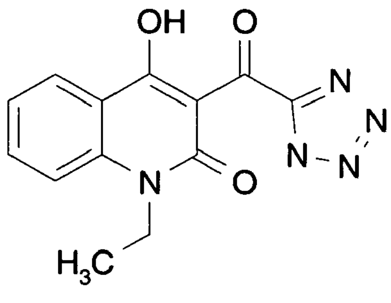

(3.16)

and of formula 3.17

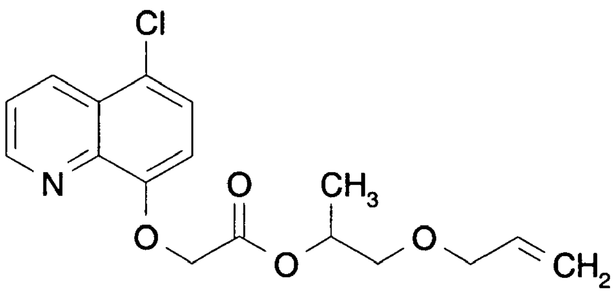

(3.17).

**10.** A method for the selective control of weeds and grasses in crops of useful plants, which comprises treating the useful plants, seed or cuttings thereof or the cultivation area thereof with a herbicidally effective amount of a composition according to claim 9.